# EUROPEAN PATENT SPECIFICATION

(11) **EP 4 075 426 B1**
(45) Date of publication and mention of the grant of the patent: **26.07.2023**
(21) Application number: 22177870.7
(22) Date of filing: 24.04.2018
(51) Int. Cl.: G10L 15/22, G10L 25/78, G06F 40/35

(54) **LOW-LATENCY INTELLIGENT AUTOMATED ASSISTANT**
INTELLIGENTER AUTOMATISIERTER ASSISTENT MIT NIEDRIGER LATENZ
ASSISTANT AUTOMATISÉ INTELLIGENT À FAIBLE LATENCE

(30) Priority: 12.05.2017 US 201762505546 P; 01.06.2017 DK PA201770427; 01.06.2017 DK PA201770428; 01.06.2017 DK PA201770429; 17.08.2017 US 201715679595
(43) Date of publication of application: 19.10.2022
(62) Divisional of application: 18723312.7
(73) Proprietor: Apple Inc., Cupertino, CA 95014 (US)
(72) Inventor: ACERO, Alejandro, Cupertino, 95014 (US); ZHANG, Hepeng, Cupertino, 95014 (US)
(74) Representative: Zacco Denmark A/S

(56) References cited:
- WO-A1-2015/184186

## Description

### CROSS-REFERENCE TO RELATED APPLICATIONS

This application claims priority to U.S. Application Serial No. 62/505,546, entitled "LOW-LATENCY INTELLIGENT AUTOMATED ASSISTANT," filed on May 12, 2017; Danish Application No. PA201770427, entitled "LOW-LATENCY INTELLIGENT AUTOMATED ASSISTANT," filed on June 1, 2017; Danish Application No. PA201770428, entitled "LOW-LATENCY INTELLIGENT AUTOMATED ASSISTANT," filed on June 1, 2017; Danish Application No. PA201770429, entitled "LOW-LATENCY INTELLIGENT AUTOMATED ASSISTANT," filed on June 1, 2017; and U.S. Application Serial No. 15/679,595, entitled "LOW-LATENCY INTELLIGENT AUTOMATED ASSISTANT," filed on August 17, 2017.

### FIELD

This relates generally to intelligent automated assistants and, more specifically, to low-latency intelligent automated assistants.

### BACKGROUND

Intelligent automated assistants (or digital assistants) can provide a beneficial interface between human users and electronic devices. Such assistants can allow users to interact with devices or systems using natural language in spoken and/or text forms. For example, a user can provide a speech input containing a user request to a digital assistant operating on an electronic device. The digital assistant can interpret the user's intent from the speech input and operationalize the user's intent into tasks. The tasks can then be performed by executing one or more services of the electronic device, and a relevant output responsive to the user request can be returned to the user.

Digital assistants are frequently implemented on mobile computing platforms, such as smart phones and tablet computers. However, such mobile computing platforms can have limited computing resources (e.g., memory and processor power) and thus digital assistants implemented on such platforms can suffer from longer processing times and thus greater latency in responding to user requests. This can result in poor user experience, which can limit the widespread adoption of digital assistants on mobile platforms. One prior art solution is disclosed in the patent document WO 2015/184186 A1 disclosing systems and processes for handling a multi-part voice command for a virtual assistant. Speech input can be received from a user that includes multiple actionable commands within a single utterance. A text string can be generated from the speech input using a speech transcription process. The text string can be parsed into multiple candidate substrings based on domain keywords, imperative verbs, predetermined substring lengths, or the like. For each candidate substring, a probability can be determined indicating whether the candidate substring corresponds to an actionable command.

### SUMMARY

The invention is set forth by the independent claims 1, 13 and 14.

Systems and processes for robust operation of a digital assistant are provided. In an example process, a user utterance is received. Based on a plurality of candidate text representations of the user utterance, a plurality of candidate user intents for the user utterance are determined. Each candidate user intent of the plurality of candidate user intents corresponds to a respective candidate task flow of a plurality of candidate task flows. A plurality of task flow scores for the plurality of candidate task flows are determined. Each task flow score of the plurality of task flow scores corresponds to a respective candidate task flow of the plurality of candidate task flows. Based on the plurality of task flow scores, a first candidate task flow of the plurality of candidate task flows is selected. The first candidate task flow is executed, including presenting to the user results from executing the first candidate task flow.

Determining a plurality of task flow scores for the plurality of candidate task flows and selecting the first candidate task flow based on the plurality of task flow scores can enable the electronic device to evaluate the reliability and feasibility of each candidate task flow prior to selecting and executing the first candidate task flow. This can enhance operability of the electronic device by improving the likelihood that the selected first candidate task flow coincides with the user's actual desired goal for providing the user utterance. In turn, this can allow the electronic device to operate with greater accuracy and reliability when identifying and performing tasks in response to a user utterance.

Executable instructions for performing the functions described herein are, optionally, included in a non-transitory computer-readable storage medium or other computer-program product configured for execution by one or more processors. Executable instructions for performing these functions are, optionally, included in a transitory computer-readable storage medium or other computer program product configured for execution by one or more processors.

### BRIEF DESCRIPTION OF THE DRAWINGS

FIG. 1 is a block diagram illustrating a system and environment for implementing a digital assistant, according to various examples.
FIG. 2A is a block diagram illustrating a portable multifunction device implementing the client-side portion of a digital assistant, according to various examples.
FIG. 2B is a block diagram illustrating exemplary components for event handling, according to various examples.
FIG. 3 illustrates a portable multifunction device implementing the client-side portion of a digital assistant, according to various examples.
FIG. 4 is a block diagram of an exemplary multifunction device with a display and a touch-sensitive surface, according to various examples.
FIG. 5A illustrates an exemplary user interface for a menu of applications on a portable multifunction device, according to various examples.
FIG. 5B illustrates an exemplary user interface for a multifunction device with a touch-sensitive surface that is separate from the display, according to various examples.
FIG. 6A illustrates a personal electronic device, according to various examples.
FIG. 6B is a block diagram illustrating a personal electronic device, according to various examples.
FIG. 7A is a block diagram illustrating a digital assistant system or a server portion thereof, according to various examples.
FIG. 7B illustrates the functions of the digital assistant shown in FIG. 7A, according to various examples.
FIG. 7C illustrates a portion of an ontology, according to various examples.
FIG. 8 is a block diagram illustrating a portion of a digital assistant module, according to various examples.
FIG. 9 is a timeline illustrating the timing of low-latency operation of a digital assistant, according to various examples.
FIG. 10 is a timeline illustrating the timing of low-latency operation of a digital assistant, according to various examples.
FIGS. 11A-11B illustrate a process for operating a digital assistant, according to various examples.
FIG. 12 illustrates a process for operating a digital assistant to generate a spoken dialogue response, according to various examples.

### DETAILED DESCRIPTION

In the following description of examples, reference is made to the accompanying drawings in which are shown by way of illustration specific examples that can be practiced. It is to be understood that other examples can be used and structural changes can be made without departing from the scope of the various examples.

As discussed above, digital assistants implemented on mobile computing platforms can suffer from longer processing times and thus greater latency in responding to user requests. In particular, certain processes performed by digital assistants, such as natural language processing, task flow processing, and/or speech synthesis, can be computationally intensive and contribute significantly to the response latency. In some digital assistant systems, the aforementioned processes are initiated only after a speech end-point condition is detected. Detecting a speech end-point condition establishes that the user has finished providing his/her spoken request. However, a speech end-point condition is frequently detected based on an absence of user speech for greater than a predetermined duration (e.g., 600ms, 700ms, or 800ms). This means that the total latency experienced by the user after the user finishes providing his/her spoken request can include the predetermined duration needed to detect a speech end-point condition and the computational time required for the digital assistant system to process the spoken request (e.g., by performing natural language processing, task flow processing, and/or speech synthesis). Given the limited computational resources of mobile computing platforms, this total latency can be considerable enough to significantly impact user engagement. It can thus be desirable to reduce the total latency experienced by the user from the time the user finishes providing his/her spoken request to the time the digital assistant system presents a response to the user request.

Techniques for reducing response latency for digital assistant systems are described herein. In particular, in some exemplary processes, natural language processing, task flow processing, and/or speech synthesis can be initiated during the predetermined duration needed to detect a speech end-point condition. For instance, in a specific example, natural language processing, task flow processing, and/or speech synthesis can be initiated upon detecting a short pause (e.g., 50ms, 75ms, or 100ms) in user speech. If the short pause develops into a long pause (e.g., 600ms, 700ms, or 800ms) that corresponds to a speech end-point condition, natural language processing, task flow processing, and/or speech synthesis would be at least partially completed at the time the speech end-point condition is detected. This can result in a reduction in the total latency experienced by the user.

In one example process for reducing response latency in a digital assistant system, a stream of audio is received. In particular, a first portion of the stream of audio containing a user utterance is received from a first time to a second time and a second portion of the stream of audio is received from the second time to a third time. The process determines whether the first portion of the stream of audio satisfies a predetermined condition. In response to determining that the first portion of the stream of audio satisfies a predetermined condition, operations are at least partially performed between the second time and the third time. The operations include determining, based on one or more candidate text representations of the user utterance, a plurality of candidate user intents for the user utterance. Each candidate user intent of the plurality of candidate user intents corresponds to a respective candidate task flow of a plurality of candidate task flows. The operations also include selecting a first candidate task flow of the plurality of candidate task flows. In addition, the operations include executing the first candidate task flow without providing an output to a user of the device. In some examples, executing the first candidate task flow includes generating spoken dialogue that is responsive to the user utterance without outputting the generated spoken dialogue. The process determines whether a speech end-point condition is detected between the second time and the third time. In response to determining that a speech end-point condition is detected between the second time and the third time, results from executing the selected first candidate task flow are presented to the user. In some examples, presenting the results includes outputting the generated spoken dialogue.

Techniques for robust operation of a digital assistant are also described herein. In particular, due to the inherent ambiguity in human speech, there is inherent uncertainty during speech recognition and natural language processing of human speech. As a result, speech recognition and natural language processing errors can frequently occur when digital assistant systems process spoken user requests. Such errors, when propagated through task flow processing, can at times result in fatal errors (e.g., no response) or in the performance of tasks that do not correspond to the user's desired goal.

An illustrative example of a task flow processing error caused by a speech recognition error is provided. In this example, the user provides the spoken request "What are Mike Dunleavy's stats?" During speech recognition processing, the digital assistant system can erroneously transcribe the spoken request as "What are Mike *Dunleavey's* stats?" Subsequently, during natural language processing, the digital assistant system can recognize (e.g., based on the word "stats") that the user is requesting for sports information and that "Mike *Dunleavey"* is a sports-related entity. Based on this interpretation, the digital assistant system can perform task flow processing and select a task flow that includes procedures for searching sports-related data sources for "Mike *Dunleavey."* However, during execution of the selected task flow, the digital assistant system may be unable to locate any information related to "Mike *Dunleavey"* in the sports-related sources due to the speech recognition error. As a result, the digital assistant system can fail to provide any substantive response to the user's request.

In another illustrative example of a task flow processing error, the user can provide the spoken request "Directions to Fidelity Investments." In this example, the digital assistant system can successfully transcribe the spoken request as "Directions to Fidelity Investments." During subsequent natural language processing, the digital assistant system can recognize (e.g., based on the word "directions") that the user is requesting for directions. However, rather than interpreting "Fidelity Investments" as a business, the digital assistant system can erroneously interpret "Fidelity Investments" as a person in the user's contact list (e.g., based on the existence of an entry corresponding to "Fidelity Investments" in the user's contact list). Based on this erroneous interpretation, the digital assistant system can perform task flow processing and select a task flow that includes procedures for searching the user's contact list for an address corresponding to "Fidelity Investments" and obtaining directions to that address. However, during execution of the selected task flow, the digital assistant system may be unable to find any address corresponding to "Fidelity Investments" in the user's contact list. Specifically, although the user has an entry corresponding to "Fidelity Investments" in his/her contact list, the entry may only include phone number information, but not address information. As a result, the digital assistant system can fail to provide any substantive response to the user's request.

Based on the illustrative examples described above, a digital assistant system that implements more robust task flow processing can be desirable. In accordance with some techniques described herein, multiple candidate task flows associated with multiple candidate user intents can be evaluated for reliability prior to selecting and executing a particular task flow. The evaluation process can be based on task flow scores determined for every candidate task flow. The task flow score for a respective candidate task flow can be based on, for example, a speech recognition confidence score of a respective speech recognition result, an intent confidence score of a respective natural language processing result, a flow parameter score of the respective candidate task flow, or any combination thereof. In some examples, the flow parameter score can be based on whether one or more missing flow parameters for the respective candidate task flow can be resolved. For example, referring to the above illustrative examples, the flow parameter score can be based on whether missing flow parameters (e.g., "sports entity" and "address" flow parameters) associated with "Mike *Dunleavey"* and "Fidelity Investments" can be resolved. In these examples, the flow parameter scores can be low because the missing flow parameters cannot be resolved. The digital assistant system can select a suitable candidate task flow based on the task flow scores of the candidate task flows. For example, a candidate task flow having a task flow score that is maximized based on the combined speech recognition confidence score, intent confidence score, and flow parameter score can be selected. By selecting a suitable candidate task flow based on determined task flow scores for every candidate task flow, the selected candidate task flow can be more likely to coincide with the user's intended goal. Moreover, fatal error may be less likely to occur during execution of a selected candidate task flow.

In an example process for robust operation of a digital assistant, a user utterance is received. Based on a plurality of candidate text representations of the user utterance, a plurality of candidate user intents for the user utterance are determined. Each candidate user intent of the plurality of candidate user intents corresponds to a respective candidate task flow of a plurality of candidate task flows. A plurality of task flow scores for the plurality of candidate task flows are determined. Each task flow score of the plurality of task flow scores corresponds to a respective candidate task flow of the plurality of candidate task flows. Based on the plurality of task flow scores, a first candidate task flow of the plurality of candidate task flows is selected. The first candidate task flow is executed, including presenting, to the user, results from executing the first candidate task flow.

Although the following description uses the terms "first," "second," etc. to describe various elements, these elements should not be limited by the terms. These terms are only used to distinguish one element from another. For example, a first input could be termed a second input, and, similarly, a second input could be termed a first input, without departing from the scope of the various described examples. The first input and the second input are both inputs and, in some cases, are separate and different inputs.

The terminology used in the description of the various described examples herein is for the purpose of describing particular examples only and is not intended to be limiting. As used in the description of the various described examples and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

### 1. System and Environment

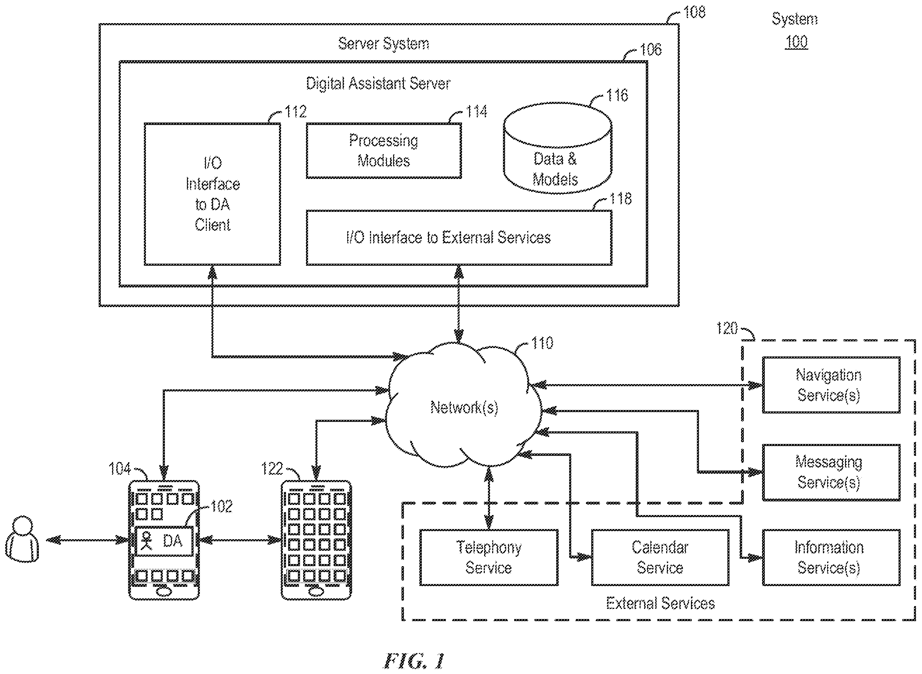

FIG. 1 illustrates a block diagram of system 100 according to various examples. In some examples, system 100 implements a digital assistant. The terms "digital assistant," "virtual assistant," "intelligent automated assistant," or "automatic digital assistant" refer to any information processing system that interprets natural language input in spoken and/or textual form to infer user intent, and performs actions based on the inferred user intent. For example, to act on an inferred user intent, the system performs one or more of the following: identifying a task flow with steps and parameters designed to accomplish the inferred user intent, inputting specific requirements from the inferred user intent into the task flow; executing the task flow by invoking programs, methods, services, APIs, or the like; and generating output responses to the user in an audible (e.g., speech) and/or visual form.

Specifically, a digital assistant is capable of accepting a user request at least partially in the form of a natural language command, request, statement, narrative, and/or inquiry. Typically, the user request seeks either an informational answer or performance of a task by the digital assistant. A satisfactory response to the user request includes a provision of the requested informational answer, a performance of the requested task, or a combination of the two. For example, a user asks the digital assistant a question, such as "Where am I right now?" Based on the user's current location, the digital assistant answers, "You are in Central Park near the west gate." The user also requests the performance of a task, for example, "Please invite my friends to my girlfriend's birthday party next week." In response, the digital assistant can acknowledge the request by saying "Yes, right away," and then send a suitable calendar invite on behalf of the user to each of the user's friends listed in the user's electronic address book. During performance of a requested task, the digital assistant sometimes interacts with the user in a continuous dialogue involving multiple exchanges of information over an extended period of time. There are numerous other ways of interacting with a digital assistant to request information or performance of various tasks. In addition to providing verbal responses and taking programmed actions, the digital assistant also provides responses in other visual or audio forms, e.g., as text, alerts, music, videos, animations, etc.

As shown in FIG. 1, in some examples, a digital assistant is implemented according to a client-server model. The digital assistant includes client-side portion 102 (hereafter "DA client 102") executed on user device 104 and server-side portion 106 (hereafter "DA server 106") executed on server system 108. DA client 102 communicates with DA server 106 through one or more networks 110. DA client 102 provides client-side functionalities such as user-facing input and output processing and communication with DA server 106. DA server 106 provides server-side functionalities for any number of DA clients 102 each residing on a respective user device 104.

In some examples, DA server 106 includes client-facing I/O interface 112, one or more processing modules 114, data and models 116, and I/O interface to external services 118. The client-facing I/O interface 112 facilitates the client-facing input and output processing for DA server 106. One or more processing modules 114 utilize data and models 116 to process speech input and determine the user's intent based on natural language input. Further, one or more processing modules 114 perform task execution based on inferred user intent. In some examples, DA server 106 communicates with external services 120 through network(s) 110 for task completion or information acquisition. I/O interface to external services 118 facilitates such communications.

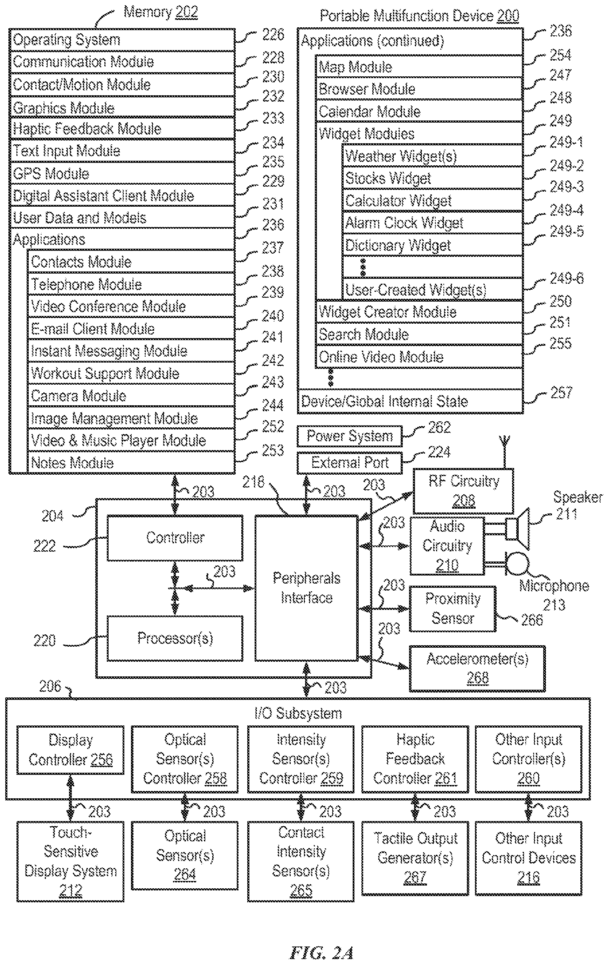

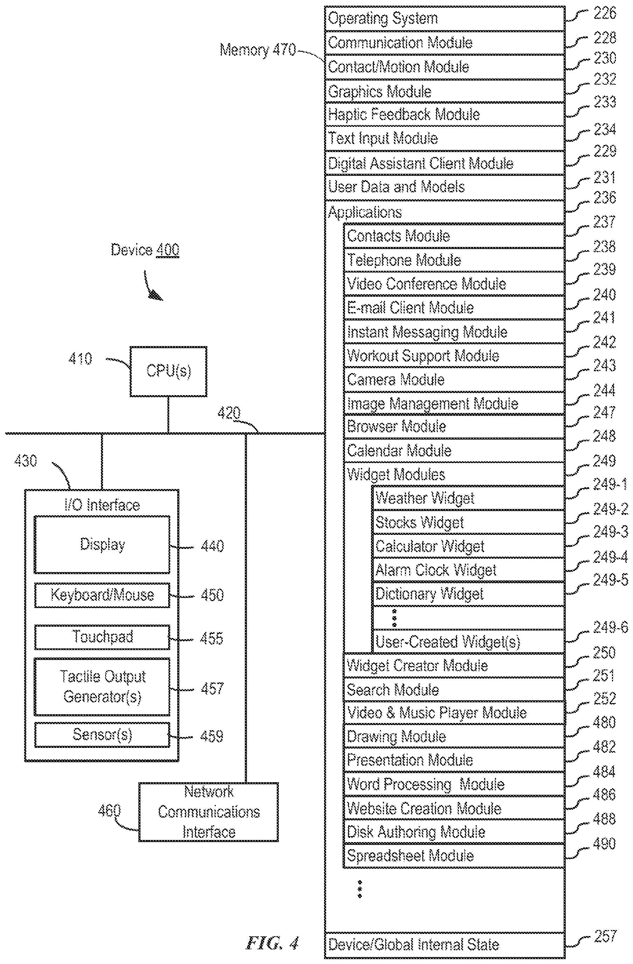

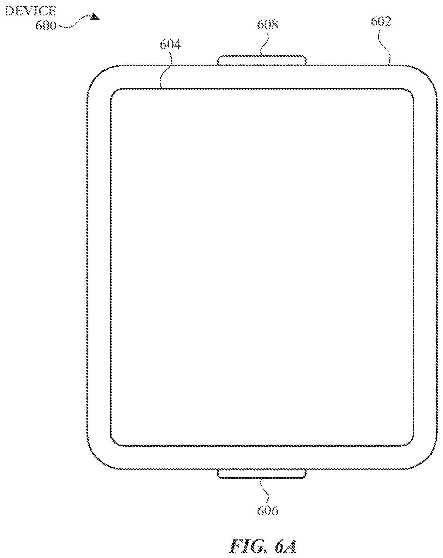

User device 104 can be any suitable electronic device. In some examples, user device is a portable multifunctional device (e.g., device 200, described below with reference to FIG. 2A), a multifunctional device (e.g., device 400, described below with reference to FIG. 4), or a personal electronic device (e.g., device 600, described below with reference to FIG. 6A-B.) A portable multifunctional device is, for example, a mobile telephone that also contains other functions, such as PDA and/or music player functions. Specific examples of portable multifunction devices include the iPhone^{®}, iPod Touch^{®}, and iPad^{®} devices from Apple Inc. of Cupertino, California. Other examples of portable multifunction devices include, without limitation, laptop or tablet computers. Further, in some examples, user device 104 is a nonportable multifunctional device. In particular, user device 104 is a desktop computer, a game console, a television, or a television set-top box. In some examples, user device 104 includes a touch-sensitive surface (e.g., touch screen displays and/or touchpads). Further, user device 104 optionally includes one or more other physical user-interface devices, such as a physical keyboard, a mouse, and/or a joystick. Various examples of electronic devices, such as multifunctional devices, are described below in greater detail.

Examples of communication network(s) 110 include local area networks (LAN) and wide area networks (WAN), e.g., the Internet. Communication network(s) 110 is implemented using any known network protocol, including various wired or wireless protocols, such as, for example, Ethernet, Universal Serial Bus (USB), FIREWIRE, Global System for Mobile Communications (GSM), Enhanced Data GSM Environment (EDGE), code division multiple access (CDMA), time division multiple access (TDMA), Bluetooth, Wi-Fi, voice over Internet Protocol (VoIP), Wi-MAX, or any other suitable communication protocol.

Server system 108 is implemented on one or more standalone data processing apparatus or a distributed network of computers. In some examples, server system 108 also employs various virtual devices and/or services of third-party service providers (e.g., third-party cloud service providers) to provide the underlying computing resources and/or infrastructure resources of server system 108.

In some examples, user device 104 communicates with DA server 106 via second user device 122. Second user device 122 is similar or identical to user device 104. For example, second user device 122 is similar to devices 200, 400, or 600 described below with reference to FIGS. 2A, 4, and 6A-B. User device 104 is configured to communicatively couple to second user device 122 via a direct communication connection, such as Bluetooth, NFC, BTLE, or the like, or via a wired or wireless network, such as a local Wi-Fi network. In some examples, second user device 122 is configured to act as a proxy between user device 104 and DA server 106. For example, DA client 102 of user device 104 is configured to transmit information (e.g., a user request received at user device 104) to DA server 106 via second user device 122. DA server 106 processes the information and return relevant data (e.g., data content responsive to the user request) to user device 104 via second user device 122.

In some examples, user device 104 is configured to communicate abbreviated requests for data to second user device 122 to reduce the amount of information transmitted from user device 104. Second user device 122 is configured to determine supplemental information to add to the abbreviated request to generate a complete request to transmit to DA server 106. This system architecture can advantageously allow user device 104 having limited communication capabilities and/or limited battery power (e.g., a watch or a similar compact electronic device) to access services provided by DA server 106 by using second user device 122, having greater communication capabilities and/or battery power (e.g., a mobile phone, laptop computer, tablet computer, or the like), as a proxy to DA server 106. While only two user devices 104 and 122 are shown in FIG. 1, it should be appreciated that system 100, in some examples, includes any number and type of user devices configured in this proxy configuration to communicate with DA server system 106.

Although the digital assistant shown in FIG. 1 includes both a client-side portion (e.g., DA client 102) and a server-side portion (e.g., DA server 106), in some examples, the functions of a digital assistant are implemented as a standalone application installed on a user device. In addition, the divisions of functionalities between the client and server portions of the digital assistant can vary in different implementations. For instance, in some examples, the DA client is a thin-client that provides only user-facing input and output processing functions, and delegates all other functionalities of the digital assistant to a backend server.

### 2. Electronic Devices

Attention is now directed toward embodiments of electronic devices for implementing the client-side portion of a digital assistant. FIG. 2A is a block diagram illustrating portable multifunction device 200 with touch-sensitive display system 212 in accordance with some embodiments. Touch-sensitive display 212 is sometimes called a "touch screen" for convenience and is sometimes known as or called a "touch-sensitive display system." Device 200 includes memory 202 (which optionally includes one or more computer-readable storage mediums), memory controller 222, one or more processing units (CPUs) 220, peripherals interface 218, RF circuitry 208, audio circuitry 210, speaker 211, microphone 213, input/output (I/O) subsystem 206, other input control devices 216, and external port 224. Device 200 optionally includes one or more optical sensors 264. Device 200 optionally includes one or more contact intensity sensors 265 for detecting intensity of contacts on device 200 (e.g., a touch-sensitive surface such as touch-sensitive display system 212 of device 200). Device 200 optionally includes one or more tactile output generators 267 for generating tactile outputs on device 200 (e.g., generating tactile outputs on a touch-sensitive surface such as touch-sensitive display system 212 of device 200 or touchpad 455 of device 400). These components optionally communicate over one or more communication buses or signal lines 203.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 200 is only one example of a portable multifunction device, and that device 200 optionally has more or fewer components than shown, optionally combines two or more components, or optionally has a different configuration or arrangement of the components. The various components shown in FIG. 2A are implemented in hardware, software, or a combination of both hardware and software, including one or more signal processing and/or application-specific integrated circuits.

Memory 202 includes one or more computer-readable storage mediums. The computer-readable storage mediums are, for example, tangible and non-transitory. Memory 202 includes high-speed random access memory and also includes non-volatile memory, such as one or more magnetic disk storage devices, flash memory devices, or other non-volatile solid-state memory devices. Memory controller 222 controls access to memory 202 by other components of device 200.

In some examples, a non-transitory computer-readable storage medium of memory 202 is used to store instructions (e.g., for performing aspects of processes described below) for use by or in connection with an instruction execution system, apparatus, or device, such as a computer-based system, processor-containing system, or other system that can fetch the instructions from the instruction execution system, apparatus, or device and execute the instructions. In other examples, the instructions (e.g., for performing aspects of the processes described below) are stored on a non-transitory computer-readable storage medium (not shown) of the server system 108 or are divided between the non-transitory computer-readable storage medium of memory 202 and the non-transitory computer-readable storage medium of server system 108.

Peripherals interface 218 is used to couple input and output peripherals of the device to CPU 220 and memory 202. The one or more processors 220 run or execute various software programs and/or sets of instructions stored in memory 202 to perform various functions for device 200 and to process data. In some embodiments, peripherals interface 218, CPU 220, and memory controller 222 are implemented on a single chip, such as chip 204. In some other embodiments, they are implemented on separate chips.

RF (radio frequency) circuitry 208 receives and sends RF signals, also called electromagnetic signals. RF circuitry 208 converts electrical signals to/from electromagnetic signals and communicates with communications networks and other communications devices via the electromagnetic signals. RF circuitry 208 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 208 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 208 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.1 1a, IEEE 802.1 1b, IEEE 802.11g, IEEE 802.11n, and/or IEEE 802.11ac), voice over Internet Protocol (VoIP), Wi-MAX, a protocol for e mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

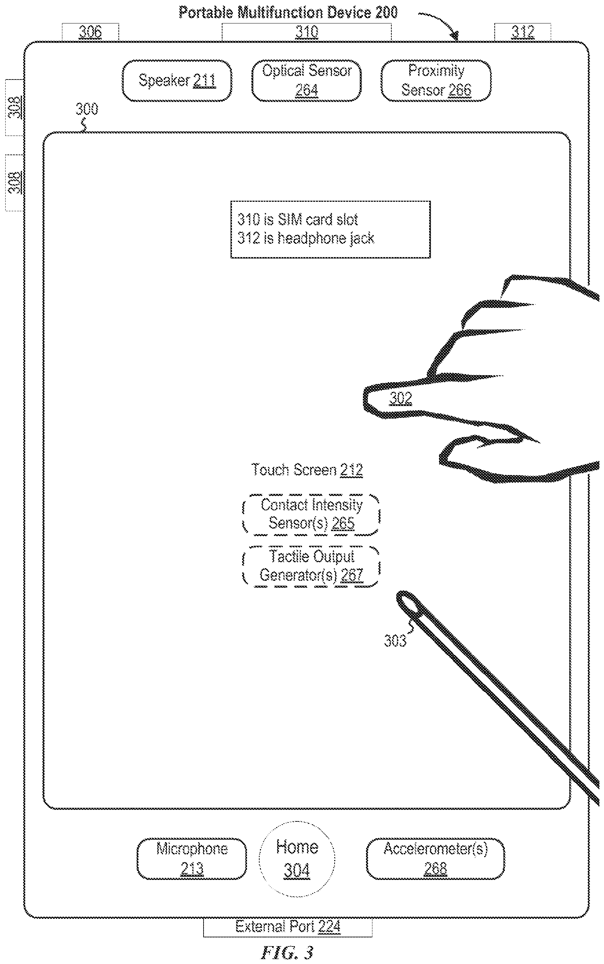

Audio circuitry 210, speaker 211, and microphone 213 provide an audio interface between a user and device 200. Audio circuitry 210 receives audio data from peripherals interface 218, converts the audio data to an electrical signal, and transmits the electrical signal to speaker 211. Speaker 211 converts the electrical signal to human-audible sound waves. Audio circuitry 210 also receives electrical signals converted by microphone 213 from sound waves. Audio circuitry 210 converts the electrical signal to audio data and transmits the audio data to peripherals interface 218 for processing. Audio data are retrieved from and/or transmitted to memory 202 and/or RF circuitry 208 by peripherals interface 218. In some embodiments, audio circuitry 210 also includes a headset jack (e.g., 312, FIG. 3). The headset jack provides an interface between audio circuitry 210 and removable audio input/output peripherals, such as output-only headphones or a headset with both output (e.g., a headphone for one or both ears) and input (e.g., a microphone).

I/O subsystem 206 couples input/output peripherals on device 200, such as touch screen 212 and other input control devices 216, to peripherals interface 218. I/O subsystem 206 optionally includes display controller 256, optical sensor controller 258, intensity sensor controller 259, haptic feedback controller 261, and one or more input controllers 260 for other input or control devices. The one or more input controllers 260 receive/send electrical signals from/to other input control devices 216. The other input control devices 216 optionally include physical buttons (e.g., push buttons, rocker buttons, etc.), dials, slider switches, joysticks, click wheels, and so forth. In some alternate embodiments, input controller(s) 260 are, optionally, coupled to any (or none) of the following: a keyboard, an infrared port, a USB port, and a pointer device such as a mouse. The one or more buttons (e.g., 308, FIG. 3) optionally include an up/down button for volume control of speaker 211 and/or microphone 213. The one or more buttons optionally include a push button (e.g., 306, FIG. 3).

A quick press of the push button disengages a lock of touch screen 212 or begin a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657,849. A longer press of the push button (e.g., 306) turns power to device 200 on or off. The user is able to customize a functionality of one or more of the buttons. Touch screen 212 is used to implement virtual or soft buttons and one or more soft keyboards.

Touch-sensitive display 212 provides an input interface and an output interface between the device and a user. Display controller 256 receives and/or sends electrical signals from/to touch screen 212. Touch screen 212 displays visual output to the user. The visual output includes graphics, text, icons, video, and any combination thereof (collectively termed "graphics"). In some embodiments, some or all of the visual output correspond to user-interface objects.

Touch screen 212 has a touch-sensitive surface, sensor, or set of sensors that accepts input from the user based on haptic and/or tactile contact. Touch screen 212 and display controller 256 (along with any associated modules and/or sets of instructions in memory 202) detect contact (and any movement or breaking of the contact) on touch screen 212 and convert the detected contact into interaction with user-interface objects (e.g., one or more soft keys, icons, web pages, or images) that are displayed on touch screen 212. In an exemplary embodiment, a point of contact between touch screen 212 and the user corresponds to a finger of the user.

Touch screen 212 uses LCD (liquid crystal display) technology, LPD (light emitting polymer display) technology, or LED (light emitting diode) technology, although other display technologies may be used in other embodiments. Touch screen 212 and display controller 256 detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 212. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 212 is analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1. However, touch screen 212 displays visual output from device 200, whereas touch-sensitive touchpads do not provide visual output.

A touch-sensitive display in some embodiments of touch screen 212 is as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 212 has, for example, a video resolution in excess of 100 dpi. In some embodiments, the touch screen has a video resolution of approximately 160 dpi. The user makes contact with touch screen 212 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 200 includes a touchpad (not shown) for activating or deactivating particular functions. In some embodiments, the touchpad is a touch-sensitive area of the device that, unlike the touch screen, does not display visual output. The touchpad is a touch-sensitive surface that is separate from touch screen 212 or an extension of the touch-sensitive surface formed by the touch screen.

Device 200 also includes power system 262 for powering the various components. Power system 262 includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 200 also includes one or more optical sensors 264. FIG. 2A shows an optical sensor coupled to optical sensor controller 258 in I/O subsystem 206. Optical sensor 264 includes charge-coupled device (CCD) or complementary metal-oxide semiconductor (CMOS) phototransistors. Optical sensor 264 receives light from the environment, projected through one or more lenses, and converts the light to data representing an image. In conjunction with imaging module 243 (also called a camera module), optical sensor 264 captures still images or video. In some embodiments, an optical sensor is located on the back of device 200, opposite touch screen display 212 on the front of the device so that the touch screen display is used as a viewfinder for still and/or video image acquisition. In some embodiments, an optical sensor is located on the front of the device so that the user's image is obtained for video conferencing while the user views the other video conference participants on the touch screen display. In some embodiments, the position of optical sensor 264 can be changed by the user (e.g., by rotating the lens and the sensor in the device housing) so that a single optical sensor 264 is used along with the touch screen display for both video conferencing and still and/or video image acquisition.

Device 200 optionally also includes one or more contact intensity sensors 265. FIG. 2A shows a contact intensity sensor coupled to intensity sensor controller 259 in I/O subsystem 206. Contact intensity sensor 265 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 265 receives contact intensity information (e.g., pressure information or a proxy for pressure information) from the environment. In some embodiments, at least one contact intensity sensor is collocated with, or proximate to, a touch-sensitive surface (e.g., touch-sensitive display system 212). In some embodiments, at least one contact intensity sensor is located on the back of device 200, opposite touch screen display 212, which is located on the front of device 200.

Device 200 also includes one or more proximity sensors 266. FIG. 2A shows proximity sensor 266 coupled to peripherals interface 218. Alternately, proximity sensor 266 is coupled to input controller 260 in I/O subsystem 206. Proximity sensor 266 is performed as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals,". In some embodiments, the proximity sensor turns off and disables touch screen 212 when the multifunction device is placed near the user's ear (e.g., when the user is making a phone call).

Device 200 optionally also includes one or more tactile output generators 267. FIG. 2A shows a tactile output generator coupled to haptic feedback controller 261 in I/O subsystem 206. Tactile output generator 267 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 265 receives tactile feedback generation instructions from haptic feedback module 233 and generates tactile outputs on device 200 that are capable of being sensed by a user of device 200. In some embodiments, at least one tactile output generator is collocated with, or proximate to, a touch-sensitive surface (e.g., touch-sensitive display system 212) and, optionally, generates a tactile output by moving the touch-sensitive surface vertically (e.g., in/out of a surface of device 200) or laterally (e.g., back and forth in the same plane as a surface of device 200). In some embodiments, at least one tactile output generator sensor is located on the back of device 200, opposite touch screen display 212, which is located on the front of device 200.

Device 200 also includes one or more accelerometers 268. FIG. 2A shows accelerometer 268 coupled to peripherals interface 218. Alternately, accelerometer 268 is coupled to an input controller 260 in I/O subsystem 206. Accelerometer 268 performs, for example, as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer,". In some embodiments, information is displayed on the touch screen display in a portrait view or a landscape view based on an analysis of data received from the one or more accelerometers. Device 200 optionally includes, in addition to accelerometer(s) 268, a magnetometer (not shown) and a GPS (or GLONASS or other global navigation system) receiver (not shown) for obtaining information concerning the location and orientation (e.g., portrait or landscape) of device 200.

In some embodiments, the software components stored in memory 202 include operating system 226, communication module (or set of instructions) 228, contact/motion module (or set of instructions) 230, graphics module (or set of instructions) 232, text input module (or set of instructions) 234, Global Positioning System (GPS) module (or set of instructions) 235, Digital Assistant Client Module 229, and applications (or sets of instructions) 236. Further, memory 202 stores data and models, such as user data and models 231. Furthermore, in some embodiments, memory 202 (FIG. 2A) or 470 (FIG. 4) stores device/global internal state 257, as shown in FIGS. 2A and 4. Device/global internal state 257 includes one or more of: active application state, indicating which applications, if any, are currently active; display state, indicating what applications, views or other information occupy various regions of touch screen display 212; sensor state, including information obtained from the device's various sensors and input control devices 216; and location information concerning the device's location and/or attitude.

Operating system 226 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 228 facilitates communication with other devices over one or more external ports 224 and also includes various software components for handling data received by RF circuitry 208 and/or external port 224. External port 224 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Contact/motion module 230 optionally detects contact with touch screen 212 (in conjunction with display controller 256) and other touch-sensitive devices (e.g., a touchpad or physical click wheel). Contact/motion module 230 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 230 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 230 and display controller 256 detect contact on a touchpad.

In some embodiments, contact/motion module 230 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 200). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 230 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 232 includes various known software components for rendering and displaying graphics on touch screen 212 or other display, including components for changing the visual impact (e.g., brightness, transparency, saturation, contrast, or other visual property) of graphics that are displayed. As used herein, the term "graphics" includes any object that can be displayed to a user, including without limitation, text, web pages, icons (such as user-interface objects including soft keys), digital images, videos, animations, and the like.

In some embodiments, graphics module 232 stores data representing graphics to be used. Each graphic is, optionally, assigned a corresponding code. Graphics module 232 receives, from applications etc., one or more codes specifying graphics to be displayed along with, if necessary, coordinate data and other graphic property data, and then generates screen image data to output to display controller 256.

Haptic feedback module 233 includes various software components for generating instructions used by tactile output generator(s) 267 to produce tactile outputs at one or more locations on device 200 in response to user interactions with device 200.

Text input module 234, which is, in some examples, a component of graphics module 232, provides soft keyboards for entering text in various applications (e.g., contacts 237, email 240, IM 241, browser 247, and any other application that needs text input).

GPS module 235 determines the location of the device and provides this information for use in various applications (e.g., to telephone 238 for use in location-based dialing; to camera 243 as picture/video metadata; and to applications that provide location-based services such as weather widgets, local yellow page widgets, and map/navigation widgets).

Digital assistant client module 229 includes various client-side digital assistant instructions to provide the client-side functionalities of the digital assistant. For example, digital assistant client module 229 is capable of accepting voice input (e.g., speech input), text input, touch input, and/or gestural input through various user interfaces (e.g., microphone 213, accelerometer(s) 268, touch-sensitive display system 212, optical sensor(s) 229, other input control devices 216, etc.) of portable multifunction device 200. Digital assistant client module 229 is also capable of providing output in audio (e.g., speech output), visual, and/or tactile forms through various output interfaces (e.g., speaker 211, touch-sensitive display system 212, tactile output generator(s) 267, etc.) of portable multifunction device 200. For example, output is provided as voice, sound, alerts, text messages, menus, graphics, videos, animations, vibrations, and/or combinations of two or more of the above. During operation, digital assistant client module 229 communicates with DA server 106 using RF circuitry 208.

User data and models 231 include various data associated with the user (e.g., userspecific vocabulary data, user preference data, user-specified name pronunciations, data from the user's electronic address book, to-do lists, shopping lists, etc.) to provide the client-side functionalities of the digital assistant. Further, user data and models 231 include various models (e.g., speech recognition models, statistical language models, natural language processing models, ontology, task flow models, service models, etc.) for processing user input and determining user intent.

In some examples, digital assistant client module 229 utilizes the various sensors, subsystems, and peripheral devices of portable multifunction device 200 to gather additional information from the surrounding environment of the portable multifunction device 200 to establish a context associated with a user, the current user interaction, and/or the current user input. In some examples, digital assistant client module 229 provides the contextual information or a subset thereof with the user input to DA server 106 to help infer the user's intent. In some examples, the digital assistant also uses the contextual information to determine how to prepare and deliver outputs to the user. Contextual information is referred to as context data.

In some examples, the contextual information that accompanies the user input includes sensor information, e.g., lighting, ambient noise, ambient temperature, images or videos of the surrounding environment, etc. In some examples, the contextual information can also include the physical state of the device, e.g., device orientation, device location, device temperature, power level, speed, acceleration, motion patterns, cellular signals strength, etc. In some examples, information related to the software state of DA server 106, e.g., running processes, installed programs, past and present network activities, background services, error logs, resources usage, etc., and of portable multifunction device 200 is provided to DA server 106 as contextual information associated with a user input.

In some examples, the digital assistant client module 229 selectively provides information (e.g., user data 231) stored on the portable multifunction device 200 in response to requests from DA server 106. In some examples, digital assistant client module 229 also elicits additional input from the user via a natural language dialogue or other user interfaces upon request by DA server 106. Digital assistant client module 229 passes the additional input to DA server 106 to help DA server 106 in intent deduction and/or fulfillment of the user's intent expressed in the user request.

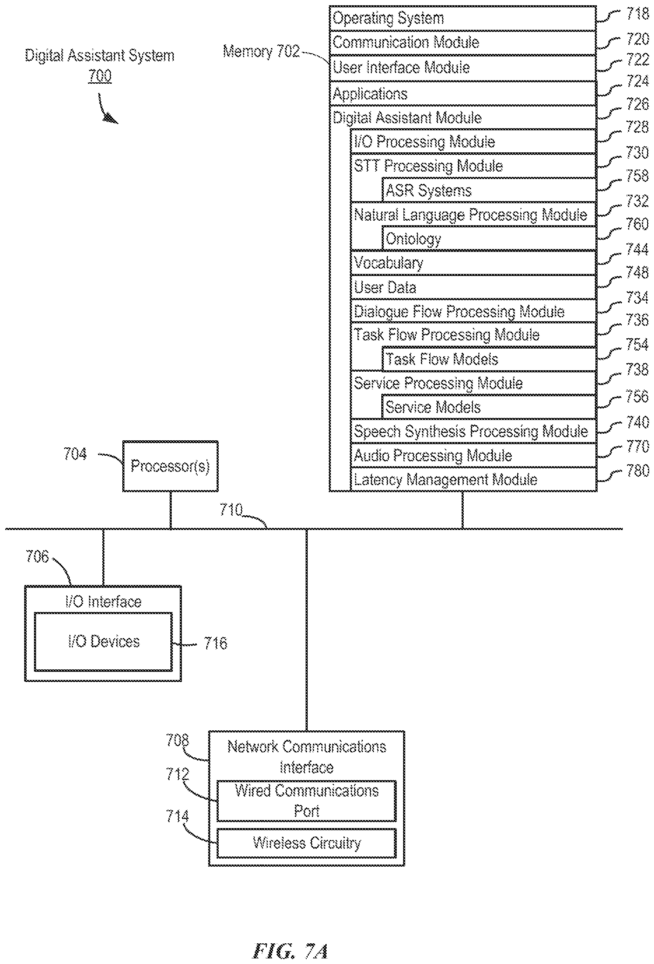

A more detailed description of a digital assistant is described below with reference to FIGS. 7A-7C. It should be recognized that digital assistant client module 229 can include any number of the sub-modules of digital assistant module 726 described below.

Applications 236 include the following modules (or sets of instructions), or a subset or superset thereof:
- Contacts module 237 (sometimes called an address book or contact list);
- Telephone module 238;
- Video conference module 239;
- E-mail client module 240;
- Instant messaging (IM) module 241;
- Workout support module 242;
- Camera module 243 for still and/or video images;
- Image management module 244;
- Video player module;
- Music player module;
- Browser module 247;
- Calendar module 248;
- Widget modules 249, which includes, in some examples, one or more of: weather widget 249-1, stocks widget 249-2, calculator widget 249-3, alarm clock widget 249-4, dictionary widget 249-5, and other widgets obtained by the user, as well as user-created widgets 249-6;
- Widget creator module 250 for making user-created widgets 249-6;
- Search module 251;
- Video and music player module 252, which merges video player module and music player module;
- Notes module 253;
- Map module 254; and/or
- Online video module 255.

Examples of other applications 236 that are stored in memory 202 include other word processing applications, other image editing applications, drawing applications, presentation applications, JAVA-enabled applications, encryption, digital rights management, voice recognition, and voice replication.

In conjunction with touch screen 212, display controller 256, contact/motion module 230, graphics module 232, and text input module 234, contacts module 237 are used to manage an address book or contact list (e.g., stored in application internal state 292 of contacts module 237 in memory 202 or memory 470), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 238, video conference module 239, e-mail 240, or IM 241; and so forth.

In conjunction with RF circuitry 208, audio circuitry 210, speaker 211, microphone 213, touch screen 212, display controller 256, contact/motion module 230, graphics module 232, and text input module 234, telephone module 238 are used to enter a sequence of characters corresponding to a telephone number, access one or more telephone numbers in contacts module 237, modify a telephone number that has been entered, dial a respective telephone number, conduct a conversation, and disconnect or hang up when the conversation is completed. As noted above, the wireless communication uses any of a plurality of communications standards, protocols, and technologies.

In conjunction with RF circuitry 208, audio circuitry 210, speaker 211, microphone 213, touch screen 212, display controller 256, optical sensor 264, optical sensor controller 258, contact/motion module 230, graphics module 232, text input module 234, contacts module 237, and telephone module 238, video conference module 239 includes executable instructions to initiate, conduct, and terminate a video conference between a user and one or more other participants in accordance with user instructions.

In conjunction with RF circuitry 208, touch screen 212, display controller 256, contact/motion module 230, graphics module 232, and text input module 234, e-mail client module 240 includes executable instructions to create, send, receive, and manage e-mail in response to user instructions. In conjunction with image management module 244, e-mail client module 240 makes it very easy to create and send e-mails with still or video images taken with camera module 243.

In conjunction with RF circuitry 208, touch screen 212, display controller 256, contact/motion module 230, graphics module 232, and text input module 234, the instant messaging module 241 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 208, touch screen 212, display controller 256, contact/motion module 230, graphics module 232, text input module 234, GPS module 235, map module 254, and music player module, workout support module 242 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 212, display controller 256, optical sensor(s) 264, optical sensor controller 258, contact/motion module 230, graphics module 232, and image management module 244, camera module 243 includes executable instructions to capture still images or video (including a video stream) and store them into memory 202, modify characteristics of a still image or video, or delete a still image or video from memory 202.

In conjunction with touch screen 212, display controller 256, contact/motion module 230, graphics module 232, text input module 234, and camera module 243, image management module 244 includes executable instructions to arrange, modify (e.g., edit), or otherwise manipulate, label, delete, present (e.g., in a digital slide show or album), and store still and/or video images.

In conjunction with RF circuitry 208, touch screen 212, display controller 256, contact/motion module 230, graphics module 232, and text input module 234, browser module 247 includes executable instructions to browse the Internet in accordance with user instructions, including searching, linking to, receiving, and displaying web pages or portions thereof, as well as attachments and other files linked to web pages.

In conjunction with RF circuitry 208, touch screen 212, display controller 256, contact/motion module 230, graphics module 232, text input module 234, e-mail client module 240, and browser module 247, calendar module 248 includes executable instructions to create, display, modify, and store calendars and data associated with calendars (e.g., calendar entries, to-do lists, etc.) in accordance with user instructions.

In conjunction with RF circuitry 208, touch screen 212, display controller 256, contact/motion module 230, graphics module 232, text input module 234, and browser module 247, widget modules 249 are mini-applications that can be downloaded and used by a user (e.g., weather widget 249-1, stocks widget 249-2, calculator widget 249-3, alarm clock widget 249-4, and dictionary widget 249-5) or created by the user (e.g., user-created widget 249-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 208, touch screen 212, display controller 256, contact/motion module 230, graphics module 232, text input module 234, and browser module 247, the widget creator module 250 are used by a user to create widgets (e.g., turning a user-specified portion of a web page into a widget).

In conjunction with touch screen 212, display controller 256, contact/motion module 230, graphics module 232, and text input module 234, search module 251 includes executable instructions to search for text, music, sound, image, video, and/or other files in memory 202 that match one or more search criteria (e.g., one or more user-specified search terms) in accordance with user instructions.

In conjunction with touch screen 212, display controller 256, contact/motion module 230, graphics module 232, audio circuitry 210, speaker 211, RF circuitry 208, and browser module 247, video and music player module 252 includes executable instructions that allow the user to download and play back recorded music and other sound files stored in one or more file formats, such as MP3 or AAC files, and executable instructions to display, present, or otherwise play back videos (e.g., on touch screen 212 or on an external, connected display via external port 224). In some embodiments, device 200 optionally includes the functionality of an MP3 player, such as an iPod (trademark of Apple Inc.).

In conjunction with touch screen 212, display controller 256, contact/motion module 230, graphics module 232, and text input module 234, notes module 253 includes executable instructions to create and manage notes, to-do lists, and the like in accordance with user instructions.

In conjunction with RF circuitry 208, touch screen 212, display controller 256, contact/motion module 230, graphics module 232, text input module 234, GPS module 235, and browser module 247, map module 254 are used to receive, display, modify, and store maps and data associated with maps (e.g., driving directions, data on stores and other points of interest at or near a particular location, and other location-based data) in accordance with user instructions.

In conjunction with touch screen 212, display controller 256, contact/motion module 230, graphics module 232, audio circuitry 210, speaker 211, RF circuitry 208, text input module 234, e-mail client module 240, and browser module 247, online video module 255 includes instructions that allow the user to access, browse, receive (e.g., by streaming and/or download), play back (e.g., on the touch screen or on an external, connected display via external port 224), send an e-mail with a link to a particular online video, and otherwise manage online videos in one or more file formats, such as H.264. In some embodiments, instant messaging module 241, rather than e-mail client module 240, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs, procedures, or modules, and thus various subsets of these modules can be combined or otherwise rearranged in various embodiments. For example, video player module can be combined with music player module into a single module (e.g., video and music player module 252, FIG. 2A). In some embodiments, memory 202 stores a subset of the modules and data structures identified above. Furthermore, memory 202 stores additional modules and data structures not described above.

In some embodiments, device 200 is a device where operation of a predefined set of functions on the device is performed exclusively through a touch screen and/or a touchpad. By using a touch screen and/or a touchpad as the primary input control device for operation of device 200, the number of physical input control devices (such as push buttons, dials, and the like) on device 200 is reduced.

The predefined set of functions that are performed exclusively through a touch screen and/or a touchpad optionally include navigation between user interfaces. In some embodiments, the touchpad, when touched by the user, navigates device 200 to a main, home, or root menu from any user interface that is displayed on device 200. In such embodiments, a "menu button" is implemented using a touchpad. In some other embodiments, the menu button is a physical push button or other physical input control device instead of a touchpad.

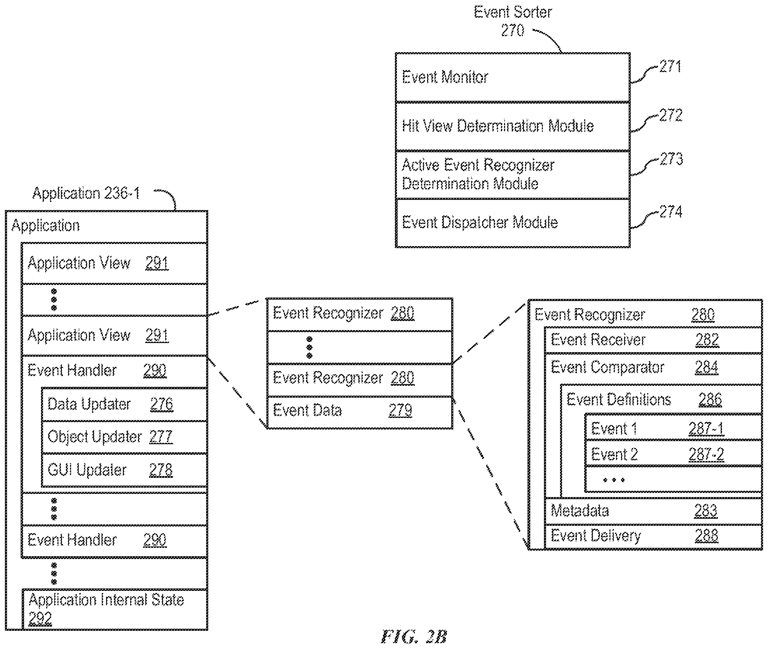

FIG. 2B is a block diagram illustrating exemplary components for event handling in accordance with some embodiments. In some embodiments, memory 202 (FIG. 2A) or 470 (FIG. 4) includes event sorter 270 (e.g., in operating system 226) and a respective application 236-1 (e.g., any of the aforementioned applications 237-251, 255, 480-490).

Event sorter 270 receives event information and determines the application 236-1 and application view 291 of application 236-1 to which to deliver the event information. Event sorter 270 includes event monitor 271 and event dispatcher module 274. In some embodiments, application 236-1 includes application internal state 292, which indicates the current application view(s) displayed on touch-sensitive display 212 when the application is active or executing. In some embodiments, device/global internal state 257 is used by event sorter 270 to determine which application(s) is (are) currently active, and application internal state 292 is used by event sorter 270 to determine application views 291 to which to deliver event information.

In some embodiments, application internal state 292 includes additional information, such as one or more of: resume information to be used when application 236-1 resumes execution, user interface state information that indicates information being displayed or that is ready for display by application 236-1, a state queue for enabling the user to go back to a prior state or view of application 236-1, and a redo/undo queue of previous actions taken by the user.

Event monitor 271 receives event information from peripherals interface 218. Event information includes information about a sub-event (e.g., a user touch on touch-sensitive display 212, as part of a multi-touch gesture). Peripherals interface 218 transmits information it receives from I/O subsystem 206 or a sensor, such as proximity sensor 266, accelerometer(s) 268, and/or microphone 213 (through audio circuitry 210). Information that peripherals interface 218 receives from I/O subsystem 206 includes information from touch-sensitive display 212 or a touch-sensitive surface.

In some embodiments, event monitor 271 sends requests to the peripherals interface 218 at predetermined intervals. In response, peripherals interface 218 transmits event information. In other embodiments, peripherals interface 218 transmits event information only when there is a significant event (e.g., receiving an input above a predetermined noise threshold and/or for more than a predetermined duration).

In some embodiments, event sorter 270 also includes a hit view determination module 272 and/or an active event recognizer determination module 273.

Hit view determination module 272 provides software procedures for determining where a sub-event has taken place within one or more views when touch-sensitive display 212 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected correspond to programmatic levels within a programmatic or view hierarchy of the application. For example, the lowest level view in which a touch is detected is called the hit view, and the set of events that are recognized as proper inputs is determined based, at least in part, on the hit view of the initial touch that begins a touch-based gesture.

Hit view determination module 272 receives information related to sub events of a touch-based gesture. When an application has multiple views organized in a hierarchy, hit view determination module 272 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 272, the hit view typically receives all sub-events related to the same touch or input source for which it was identified as the hit view.

Active event recognizer determination module 273 determines which view or views within a view hierarchy should receive a particular sequence of sub-events. In some embodiments, active event recognizer determination module 273 determines that only the hit view should receive a particular sequence of sub-events. In other embodiments, active event recognizer determination module 273 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 274 dispatches the event information to an event recognizer (e.g., event recognizer 280). In embodiments including active event recognizer determination module 273, event dispatcher module 274 delivers the event information to an event recognizer determined by active event recognizer determination module 273. In some embodiments, event dispatcher module 274 stores in an event queue the event information, which is retrieved by a respective event receiver 282.

In some embodiments, operating system 226 includes event sorter 270. Alternatively, application 236-1 includes event sorter 270. In yet other embodiments, event sorter 270 is a stand-alone module, or a part of another module stored in memory 202, such as contact/motion module 230.

In some embodiments, application 236-1 includes a plurality of event handlers 290 and one or more application views 291, each of which includes instructions for handling touch events that occur within a respective view of the application's user interface. Each application view 291 of the application 236-1 includes one or more event recognizers 280. Typically, a respective application view 291 includes a plurality of event recognizers 280. In other embodiments, one or more of event recognizers 280 are part of a separate module, such as a user interface kit (not shown) or a higher level object from which application 236-1 inherits methods and other properties. In some embodiments, a respective event handler 290 includes one or more of: data updater 276, object updater 277, GUI updater 278, and/or event data 279 received from event sorter 270. Event handler 290 utilizes or calls data updater 276, object updater 277, or GUI updater 278 to update the application internal state 292. Alternatively, one or more of the application views 291 include one or more respective event handlers 290. Also, in some embodiments, one or more of data updater 276, object updater 277, and GUI updater 278 are included in a respective application view 291.

A respective event recognizer 280 receives event information (e.g., event data 279) from event sorter 270 and identifies an event from the event information. Event recognizer 280 includes event receiver 282 and event comparator 284. In some embodiments, event recognizer 280 also includes at least a subset of: metadata 283, and event delivery instructions 288 (which include sub-event delivery instructions).

Event receiver 282 receives event information from event sorter 270. The event information includes information about a sub-event, for example, a touch or a touch movement. Depending on the sub-event, the event information also includes additional information, such as location of the sub-event. When the sub-event concerns motion of a touch, the event information also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 284 compares the event information to predefined event or sub-event definitions and, based on the comparison, determines an event or sub event, or determines or updates the state of an event or sub-event. In some embodiments, event comparator 284 includes event definitions 286. Event definitions 286 contain definitions of events (e.g., predefined sequences of sub-events), for example, event 1 (287-1), event 2 (287-2), and others. In some embodiments, sub-events in an event (287) include, for example, touch begin, touch end, touch movement, touch cancellation, and multiple touching. In one example, the definition for event 1 (287-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (287-2) is a dragging on a displayed object. The dragging, for example, comprises a touch (or contact) on the displayed object for a predetermined phase, a movement of the touch across touch-sensitive display 212, and liftoff of the touch (touch end). In some embodiments, the event also includes information for one or more associated event handlers 290.

In some embodiments, event definition 287 includes a definition of an event for a respective user-interface object. In some embodiments, event comparator 284 performs a hit test to determine which user-interface object is associated with a sub-event. For example, in an application view in which three user-interface objects are displayed on touch-sensitive display 212, when a touch is detected on touch-sensitive display 212, event comparator 284 performs a hit test to determine which of the three user-interface objects is associated with the touch (sub-event). If each displayed object is associated with a respective event handler 290, the event comparator uses the result of the hit test to determine which event handler 290 should be activated. For example, event comparator 284 selects an event handler associated with the sub-event and the object triggering the hit test.

In some embodiments, the definition for a respective event (287) also includes delayed actions that delay delivery of the event information until after it has been determined whether the sequence of sub-events does or does not correspond to the event recognizer's event type.

When a respective event recognizer 280 determines that the series of sub-events do not match any of the events in event definitions 286, the respective event recognizer 280 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 280 includes metadata 283 with configurable properties, flags, and/or lists that indicate how the event delivery system should perform sub-event delivery to actively involved event recognizers. In some embodiments, metadata 283 includes configurable properties, flags, and/or lists that indicate how event recognizers interact, or are enabled to interact, with one another. In some embodiments, metadata 283 includes configurable properties, flags, and/or lists that indicate whether sub-events are delivered to varying levels in the view or programmatic hierarchy.

In some embodiments, a respective event recognizer 280 activates event handler 290 associated with an event when one or more particular sub-events of an event are recognized. In some embodiments, a respective event recognizer 280 delivers event information associated with the event to event handler 290. Activating an event handler 290 is distinct from sending (and deferred sending) sub-events to a respective hit view. In some embodiments, event recognizer 280 throws a flag associated with the recognized event, and event handler 290 associated with the flag catches the flag and performs a predefined process.

In some embodiments, event delivery instructions 288 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 276 creates and updates data used in application 236-1. For example, data updater 276 updates the telephone number used in contacts module 237, or stores a video file used in video player module. In some embodiments, object updater 277 creates and updates objects used in application 236-1. For example, object updater 277 creates a new user-interface object or updates the position of a user-interface object. GUI updater 278 updates the GUI. For example, GUI updater 278 prepares display information and sends it to graphics module 232 for display on a touch-sensitive display.

In some embodiments, event handler(s) 290 includes or has access to data updater 276, object updater 277, and GUI updater 278. In some embodiments, data updater 276, object updater 277, and GUI updater 278 are included in a single module of a respective application 236-1 or application view 291. In other embodiments, they are included in two or more software modules.

It shall be understood that the foregoing discussion regarding event handling of user touches on touch-sensitive displays also applies to other forms of user inputs to operate multifunction devices 200 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 3 illustrates a portable multifunction device 200 having a touch screen 212 in accordance with some embodiments. The touch screen optionally displays one or more graphics within user interface (UI) 300. In this embodiment, as well as others described below, a user is enabled to select one or more of the graphics by making a gesture on the graphics, for example, with one or more fingers 302 (not drawn to scale in the figure) or one or more styluses 303 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 200. In some implementations or circumstances, inadvertent contact with a graphic does not select the graphic. For example, a swipe gesture that sweeps over an application icon optionally does not select the corresponding application when the gesture corresponding to selection is a tap.

Device 200 also includes one or more physical buttons, such as "home" or menu button 304. As described previously, menu button 304 is used to navigate to any application 236 in a set of applications that is executed on device 200. Alternatively, in some embodiments, the menu button is implemented as a soft key in a GUI displayed on touch screen 212.

In one embodiment, device 200 includes touch screen 212, menu button 304, push button 306 for powering the device on/off and locking the device, volume adjustment button(s) 308, subscriber identity module (SIM) card slot 310, headset jack 312, and docking/charging external port 224. Push button 306 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 200 also accepts verbal input for activation or deactivation of some functions through microphone 213. Device 200 also, optionally, includes one or more contact intensity sensors 265 for detecting intensity of contacts on touch screen 212 and/or one or more tactile output generators 267 for generating tactile outputs for a user of device 200.

FIG. 4 is a block diagram of an exemplary multifunction device with a display and a touch-sensitive surface in accordance with some embodiments. Device 400 need not be portable. In some embodiments, device 400 is a laptop computer, a desktop computer, a tablet computer, a multimedia player device, a navigation device, an educational device (such as a child's learning toy), a gaming system, or a control device (e.g., a home or industrial controller). Device 400 typically includes one or more processing units (CPUs) 410, one or more network or other communications interfaces 460, memory 470, and one or more communication buses 420 for interconnecting these components. Communication buses 420 optionally include circuitry (sometimes called a chipset) that interconnects and controls communications between system components. Device 400 includes input/output (I/O) interface 430 comprising display 440, which is typically a touch screen display. I/O interface 430 also optionally includes a keyboard and/or mouse (or other pointing device) 450 and touchpad 455, tactile output generator 457 for generating tactile outputs on device 400 (e.g., similar to tactile output generator(s) 267 described above with reference to FIG. 2A), sensors 459 (e.g., optical, acceleration, proximity, touch-sensitive, and/or contact intensity sensors similar to contact intensity sensor(s) 265 described above with reference to FIG. 2A). Memory 470 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 470 optionally includes one or more storage devices remotely located from CPU(s) 410. In some embodiments, memory 470 stores programs, modules, and data structures analogous to the programs, modules, and data structures stored in memory 202 of portable multifunction device 200 (FIG. 2A), or a subset thereof. Furthermore, memory 470 optionally stores additional programs, modules, and data structures not present in memory 202 of portable multifunction device 200. For example, memory 470 of device 400 optionally stores drawing module 480, presentation module 482, word processing module 484, website creation module 486, disk authoring module 488, and/or spreadsheet module 490, while memory 202 of portable multifunction device 200 (FIG. 2A) optionally does not store these modules.

Each of the above-identified elements in FIG. 4 is, in some examples, stored in one or more of the previously mentioned memory devices. Each of the above-identified modules corresponds to a set of instructions for performing a function described above. The above-identified modules or programs (e.g., sets of instructions) need not be implemented as separate software programs, procedures, or modules, and thus various subsets of these modules are combined or otherwise rearranged in various embodiments. In some embodiments, memory 470 stores a subset of the modules and data structures identified above. Furthermore, memory 470 stores additional modules and data structures not described above.

Attention is now directed towards embodiments of user interfaces that can be implemented on, for example, portable multifunction device 200.

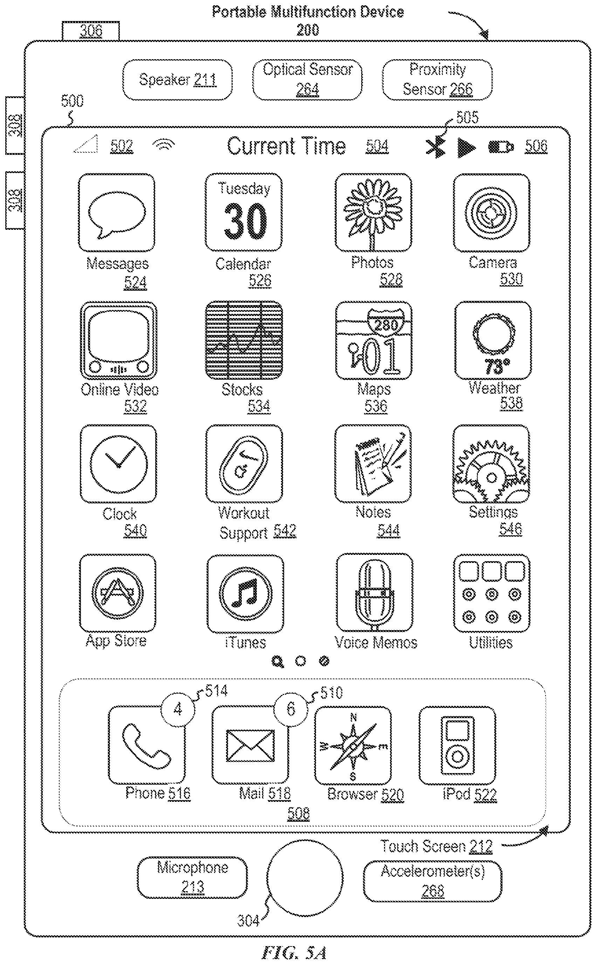

FIG. 5A illustrates an exemplary user interface for a menu of applications on portable multifunction device 200 in accordance with some embodiments. Similar user interfaces are implemented on device 400. In some embodiments, user interface 500 includes the following elements, or a subset or superset thereof:

Signal strength indicator(s) 502 for wireless communication(s), such as cellular and Wi-Fi signals;
• Time 504;
• Bluetooth indicator 505;
• Battery status indicator 506;
• Tray 508 with icons for frequently used applications, such as:
   ∘ Icon 516 for telephone module 238, labeled "Phone," which optionally includes an indicator 514 of the number of missed calls or voicemail messages;
   ∘ Icon 518 for e-mail client module 240, labeled "Mail," which optionally includes an indicator 510 of the number of unread e-mails;
   ∘ Icon 520 for browser module 247, labeled "Browser;" and
   ∘ Icon 522 for video and music player module 252, also referred to as iPod (trademark of Apple Inc.) module 252, labeled "iPod;" and
• Icons for other applications, such as:
   ∘ Icon 524 for IM module 241, labeled "Messages;"
   ∘ Icon 526 for calendar module 248, labeled "Calendar;"
   ∘ Icon 528 for image management module 244, labeled "Photos;"
   ∘ Icon 530 for camera module 243, labeled "Camera;"
   ∘ Icon 532 for online video module 255, labeled "Online Video;"
   ∘ Icon 534 for stocks widget 249-2, labeled "Stocks;"
   ∘ Icon 536 for map module 254, labeled "Maps;"
   ∘ Icon 538 for weather widget 249-1, labeled "Weather;"
   ∘ Icon 540 for alarm clock widget 249-4, labeled "Clock;"
   ∘ Icon 542 for workout support module 242, labeled "Workout Support;"
   ∘ Icon 544 for notes module 253, labeled "Notes;" and
   ∘ Icon 546 for a settings application or module, labeled "Settings," which provides access to settings for device 200 and its various applications 236.

It should be noted that the icon labels illustrated in FIG. 5A are merely exemplary. For example, icon 522 for video and music player module 252 is optionally labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

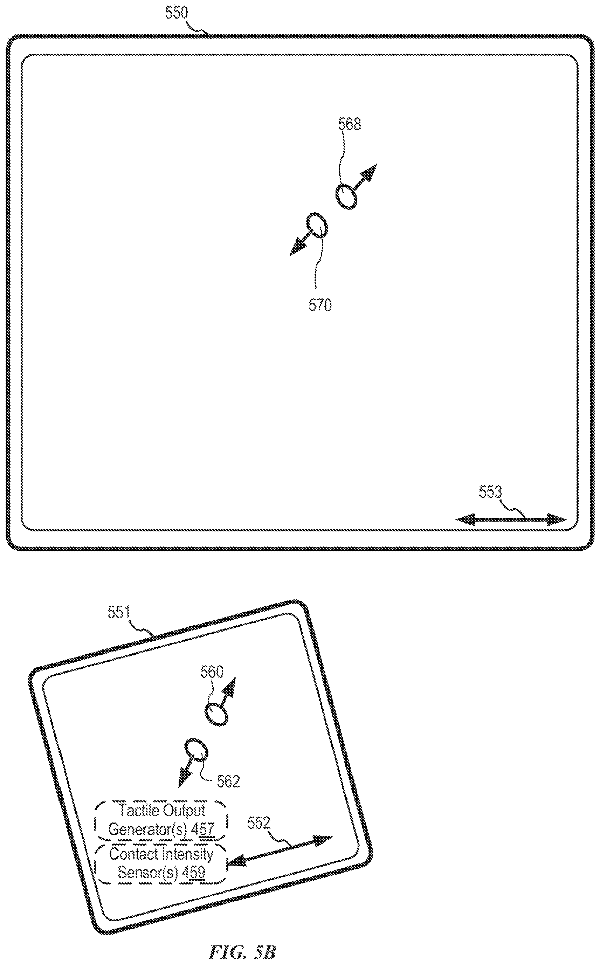

FIG. 5B illustrates an exemplary user interface on a device (e.g., device 400, FIG. 4) with a touch-sensitive surface 551 (e.g., a tablet or touchpad 455, FIG. 4) that is separate from the display 550 (e.g., touch screen display 212). Device 400 also, optionally, includes one or more contact intensity sensors (e.g., one or more of sensors 457) for detecting intensity of contacts on touch-sensitive surface 551 and/or one or more tactile output generators 459 for generating tactile outputs for a user of device 400.

Although some of the examples which follow will be given with reference to inputs on touch screen display 212 (where the touch-sensitive surface and the display are combined), in some embodiments, the device detects inputs on a touch-sensitive surface that is separate from the display, as shown in FIG. 5B. In some embodiments, the touch-sensitive surface (e.g., 551 in FIG. 5B) has a primary axis (e.g., 552 in FIG. 5B) that corresponds to a primary axis (e.g., 553 in FIG. 5B) on the display (e.g., 550). In accordance with these embodiments, the device detects contacts (e.g., 560 and 562 in FIG. 5B) with the touch-sensitive surface 551 at locations that correspond to respective locations on the display (e.g., in FIG. 5B, 560 corresponds to 568 and 562 corresponds to 570). In this way, user inputs (e.g., contacts 560 and 562, and movements thereof) detected by the device on the touch-sensitive surface (e.g., 551 in FIG. 5B) are used by the device to manipulate the user interface on the display (e.g., 550 in FIG. 5B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

FIG. 6A illustrates exemplary personal electronic device 600. Device 600 includes body 602. In some embodiments, device 600 includes some or all of the features described with respect to devices 200 and 400 (e.g., FIGS. 2A-4). In some embodiments, device 600 has touch-sensitive display screen 604, hereafter touch screen 604. Alternatively, or in addition to touch screen 604, device 600 has a display and a touch-sensitive surface. As with devices 200 and 400, in some embodiments, touch screen 604 (or the touch-sensitive surface) has one or more intensity sensors for detecting intensity of contacts (e.g., touches) being applied. The one or more intensity sensors of touch screen 604 (or the touch-sensitive surface) provide output data that represents the intensity of touches. The user interface of device 600 responds to touches based on their intensity, meaning that touches of different intensities can invoke different user interface operations on device 600.

Techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, and International Patent Application Serial No. PCT/LTS2013/069483, titled "Device, Method, and Graphical User Interface for Transitioning Between Touch Input to Display Output Relationships," filed November 11, 2013.

In some embodiments, device 600 has one or more input mechanisms 606 and 608. Input mechanisms 606 and 608, if included, are physical. Examples of physical input mechanisms include push buttons and rotatable mechanisms. In some embodiments, device 600 has one or more attachment mechanisms. Such attachment mechanisms, if included, can permit attachment of device 600 with, for example, hats, eyewear, earrings, necklaces, shirts, jackets, bracelets, watch straps, chains, trousers, belts, shoes, purses, backpacks, and so forth. These attachment mechanisms permit device 600 to be worn by a user.

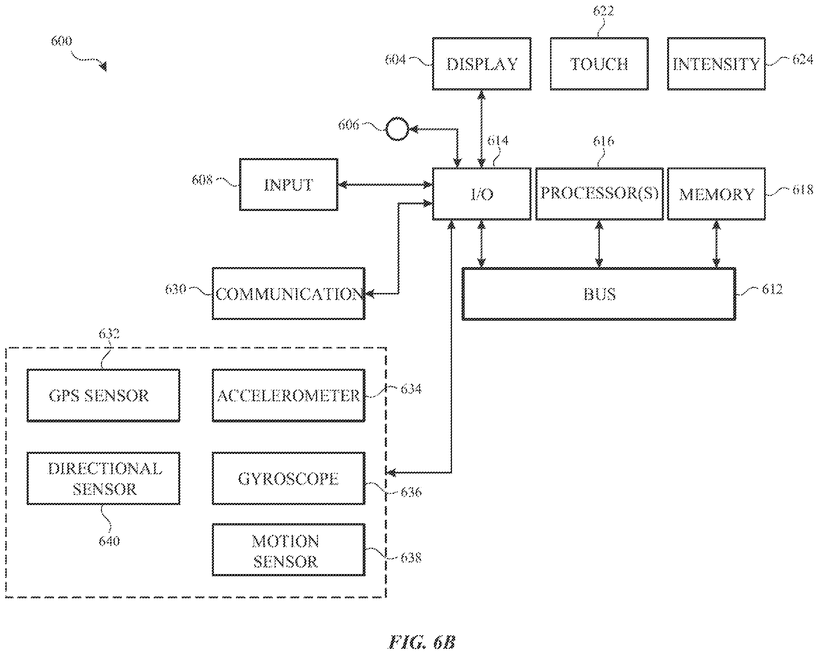

FIG. 6B depicts exemplary personal electronic device 600. In some embodiments, device 600 includes some or all of the components described with respect to FIGS. 2A, 2B, and 4. Device 600 has bus 612 that operatively couples I/O section 614 with one or more computer processors 616 and memory 618. I/O section 614 is connected to display 604, which can have touch-sensitive component 622 and, optionally, touch-intensity sensitive component 624. In addition, I/O section 614 is connected with communication unit 630 for receiving application and operating system data, using Wi-Fi, Bluetooth, near field communication (NFC), cellular, and/or other wireless communication techniques. Device 600 includes input mechanisms 606 and/or 608. Input mechanism 606 is a rotatable input device or a depressible and rotatable input device, for example. Input mechanism 608 is a button, in some examples.

Input mechanism 608 is a microphone, in some examples. Personal electronic device 600 includes, for example, various sensors, such as GPS sensor 632, accelerometer 634, directional sensor 640 (e.g., compass), gyroscope 636, motion sensor 638, and/or a combination thereof, all of which are operatively connected to I/O section 614.

Memory 618 of personal electronic device 600 is a non-transitory computer-readable storage medium, for storing computer-executable instructions, which, when executed by one or more computer processors 616, for example, cause the computer processors to perform the techniques and processes described below. The computer-executable instructions, for example, are also stored and/or transported within any non-transitory computer-readable storage medium for use by or in connection with an instruction execution system, apparatus, or device, such as a computer-based system, processor-containing system, or other system that can fetch the instructions from the instruction execution system, apparatus, or device and execute the instructions. Personal electronic device 600 is not limited to the components and configuration of FIG. 6B, but can include other or additional components in multiple configurations.

As used here, the term "affordance" refers to a user-interactive graphical user interface object that is, for example, displayed on the display screen of devices 104, 200, 400, and/or 600 (FIGS. 1, 2, 4, and 6). For example, an image (e.g., icon), a button, and text (e.g., hyperlink) each constitutes an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 455 in FIG. 4 or touch-sensitive surface 551 in FIG. 5B) while the cursor is over a particular user interface element (e.g., a button, window, slider or other user interface element), the particular user interface element is adjusted in accordance with the detected input. In some implementations that include a touch screen display (e.g., touch-sensitive display system 212 in FIG. 2A or touch screen 212 in FIG. 5A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation) rather than being used to determine whether to perform a first operation or a second operation.

In some embodiments, a portion of a gesture is identified for purposes of determining a characteristic intensity. For example, a touch-sensitive surface receives a continuous swipe contact transitioning from a start location and reaching an end location, at which point the intensity of the contact increases. In this example, the characteristic intensity of the contact at the end location is based on only a portion of the continuous swipe contact, and not the entire swipe contact (e.g., only the portion of the swipe contact at the end location). In some embodiments, a smoothing algorithm is applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The intensity of a contact on the touch-sensitive surface is characterized relative to one or more intensity thresholds, such as a contact-detection intensity threshold, a light press intensity threshold, a deep press intensity threshold, and/or one or more other intensity thresholds. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

An increase of characteristic intensity of the contact from an intensity below the light press intensity threshold to an intensity between the light press intensity threshold and the deep press intensity threshold is sometimes referred to as a "light press" input. An increase of characteristic intensity of the contact from an intensity below the deep press intensity threshold to an intensity above the deep press intensity threshold is sometimes referred to as a "deep press" input. An increase of characteristic intensity of the contact from an intensity below the contact-detection intensity threshold to an intensity between the contact-detection intensity threshold and the light press intensity threshold is sometimes referred to as detecting the contact on the touch-surface. A decrease of characteristic intensity of the contact from an intensity above the contact-detection intensity threshold to an intensity below the contact-detection intensity threshold is sometimes referred to as detecting liftoff of the contact from the touch-surface. In some embodiments, the contact-detection intensity threshold is zero. In some embodiments, the contact-detection intensity threshold is greater than zero.

In some embodiments described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the descriptions of operations performed in response to a press input associated with a press-input intensity threshold or in response to a gesture including the press input are, optionally, triggered in response to detecting either: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, and/or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold.

### 3. Digital Assistant System

FIG. 7A illustrates a block diagram of digital assistant system 700 in accordance with various examples. In some examples, digital assistant system 700 is implemented on a standalone computer system. In some examples, digital assistant system 700 is distributed across multiple computers. In some examples, some of the modules and functions of the digital assistant are divided into a server portion and a client portion, where the client portion resides on one or more user devices (e.g., devices 104, 122, 200, 400, or 600) and communicates with the server portion (e.g., server system 108) through one or more networks, e.g., as shown in FIG. 1. In some examples, digital assistant system 700 is an implementation of server system 108 (and/or DA server 106) shown in FIG. 1. It should be noted that digital assistant system 700 is only one example of a digital assistant system, and that digital assistant system 700 can have more or fewer components than shown, can combine two or more components, or can have a different configuration or arrangement of the components. The various components shown in FIG. 7A are implemented in hardware, software instructions for execution by one or more processors, firmware, including one or more signal processing and/or application specific integrated circuits, or a combination thereof.

Digital assistant system 700 includes memory 702, one or more processors 704, input/output (I/O) interface 706, and network communications interface 708. These components can communicate with one another over one or more communication buses or signal lines 710.

In some examples, memory 702 includes a non-transitory computer-readable medium, such as high-speed random access memory and/or a non-volatile computer-readable storage medium (e.g., one or more magnetic disk storage devices, flash memory devices, or other non-volatile solid-state memory devices).

In some examples, I/O interface 706 couples input/output devices 716 of digital assistant system 700, such as displays, keyboards, touch screens, and microphones, to user interface module 722. I/O interface 706, in conjunction with user interface module 722, receives user inputs (e.g., voice input, keyboard inputs, touch inputs, etc.) and processes them accordingly. In some examples, e.g., when the digital assistant is implemented on a standalone user device, digital assistant system 700 includes any of the components and I/O communication interfaces described with respect to devices 200, 400, or 600 in FIGS. 2A, 4, 6A-B, respectively. In some examples, digital assistant system 700 represents the server portion of a digital assistant implementation, and can interact with the user through a client-side portion residing on a user device (e.g., devices 104, 200, 400, or 600).

In some examples, the network communications interface 708 includes wired communication port(s) 712 and/or wireless transmission and reception circuitry 714. The wired communication port(s) receives and send communication signals via one or more wired interfaces, e.g., Ethernet, Universal Serial Bus (USB), FIREWIRE, etc. The wireless circuitry 714 receives and sends RF signals and/or optical signals from/to communications networks and other communications devices. The wireless communications use any of a plurality of communications standards, protocols, and technologies, such as GSM, EDGE, CDMA, TDMA, Bluetooth, Wi-Fi, VoIP, Wi-MAX, or any other suitable communication protocol. Network communications interface 708 enables communication between digital assistant system 700 with networks, such as the Internet, an intranet, and/or a wireless network, such as a cellular telephone network, a wireless local area network (LAN), and/or a metropolitan area network (MAN), and other devices.

In some examples, memory 702, or the computer-readable storage media of memory 702, stores programs, modules, instructions, and data structures including all or a subset of: operating system 718, communications module 720, user interface module 722, one or more applications 724, and digital assistant module 726. In particular, memory 702, or the computer-readable storage media of memory 702, stores instructions for performing the processes described below. One or more processors 704 execute these programs, modules, and instructions, and reads/writes from/to the data structures.

Operating system 718 (e.g., Darwin, RTXC, LINUX, UNIX, iOS, OS X, WINDOWS, or an embedded operating system such as VxWorks) includes various software components and/or drivers for controlling and managing general system tasks (e.g., memory management, storage device control, power management, etc.) and facilitates communications between various hardware, firmware, and software components.

Communications module 720 facilitates communications between digital assistant system 700 with other devices over network communications interface 708. For example, communications module 720 communicates with RF circuitry 208 of electronic devices such as devices 200, 400, and 600 shown in FIG. 2A, 4, 6A-B, respectively. Communications module 720 also includes various components for handling data received by wireless circuitry 714 and/or wired communications port 712.

User interface module 722 receives commands and/or inputs from a user via I/O interface 706 (e.g., from a keyboard, touch screen, pointing device, controller, and/or microphone), and generate user interface objects on a display. User interface module 722 also prepares and delivers outputs (e.g., speech, sound, animation, text, icons, vibrations, haptic feedback, light, etc.) to the user via the I/O interface 706 (e.g., through displays, audio channels, speakers, touch-pads, etc.).

Applications 724 include programs and/or modules that are configured to be executed by one or more processors 704. For example, if the digital assistant system is implemented on a standalone user device, applications 724 include user applications, such as games, a calendar application, a navigation application, or an email application. If digital assistant system 700 is implemented on a server, applications 724 include resource management applications, diagnostic applications, or scheduling applications, for example.

Memory 702 also stores digital assistant module 726 (or the server portion of a digital assistant). In some examples, digital assistant module 726 includes the following sub-modules, or a subset or superset thereof: input/output processing module 728, speech-to-text (STT) processing module 730, natural language processing module 732, dialogue flow processing module 734, task flow processing module 736, service processing module 738, and speech synthesis processing module 740. Each of these modules has access to one or more of the following systems or data and models of the digital assistant module 726, or a subset or superset thereof: ontology 760, vocabulary index 744, user data 748, task flow models 754, service models 756, and ASR systems 758.

In some examples, using the processing modules, data, and models implemented in digital assistant module 726, the digital assistant can perform at least some of the following: converting speech input into text; identifying a user's intent expressed in a natural language input received from the user; actively eliciting and obtaining information needed to fully infer the user's intent (e.g., by disambiguating words, games, intentions, etc.); determining the task flow for fulfilling the inferred intent; and executing the task flow to fulfill the inferred intent.

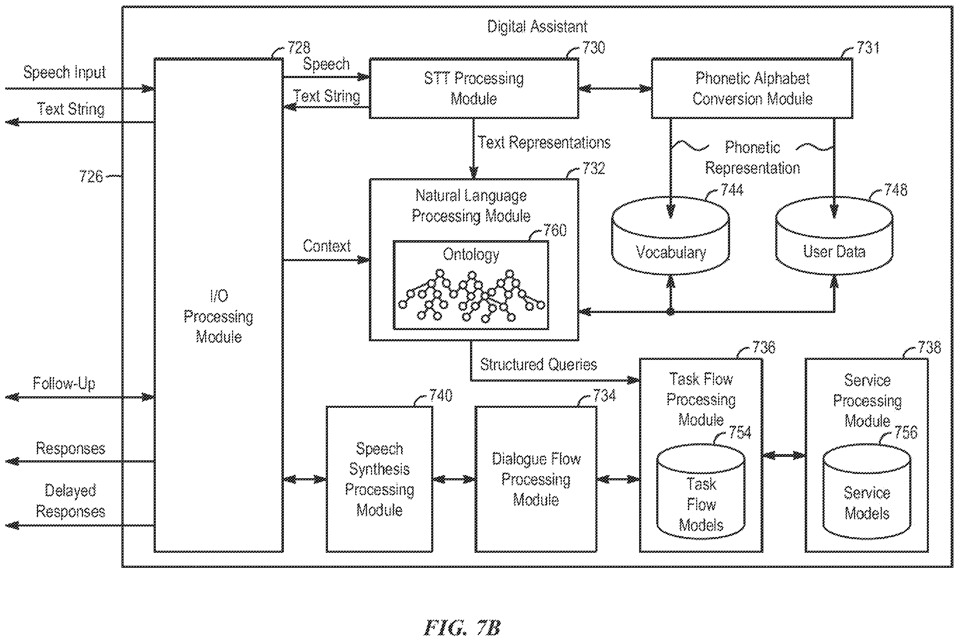

In some examples, as shown in FIG. 7B, I/O processing module 728 interacts with the user through I/O devices 716 in FIG. 7A or with a user device (e.g., devices 104, 200, 400, or 600) through network communications interface 708 in FIG. 7A to obtain user input (e.g., a speech input) and to provide responses (e.g., as speech outputs) to the user input. I/O processing module 728 optionally obtains contextual information associated with the user input from the user device, along with or shortly after the receipt of the user input. The contextual information includes user-specific data, vocabulary, and/or preferences relevant to the user input. In some examples, the contextual information also includes software and hardware states of the user device at the time the user request is received, and/or information related to the surrounding environment of the user at the time that the user request was received. In some examples, I/O processing module 728 also sends follow-up questions to, and receive answers from, the user regarding the user request. When a user request is received by I/O processing module 728 and the user request includes speech input, I/O processing module 728 forwards the speech input to STT processing module 730 (or speech recognizer) for speech-to-text conversions.

STT processing module 730 includes one or more ASR systems 758. The one or more ASR systems 758 can process the speech input that is received through I/O processing module 728 to produce a recognition result. Each ASR system 758 includes a front-end speech pre-processor. The front-end speech pre-processor extracts representative features from the speech input. For example, the front-end speech pre-processor performs a Fourier transform on the speech input to extract spectral features that characterize the speech input as a sequence of representative multi-dimensional vectors. Further, each ASR system 758 includes one or more speech recognition models (e.g., acoustic models and/or language models) and implements one or more speech recognition engines. Examples of speech recognition models include Hidden Markov Models, Gaussian-Mixture Models, Deep Neural Network Models, n-gram language models, and other statistical models. Examples of speech recognition engines include the dynamic time warping based engines and weighted finite-state transducers (WFST) based engines. The one or more speech recognition models and the one or more speech recognition engines are used to process the extracted representative features of the front-end speech pre-processor to produce intermediate recognitions results (e.g., phonemes, phonemic strings, and sub-words), and ultimately, text recognition results (e.g., words, word strings, or sequence of tokens). In some examples, the speech input is processed at least partially by a third-party service or on the user's device (e.g., device 104, 200, 400, or 600) to produce the recognition result. Once STT processing module 730 produces recognition results containing a text string (e.g., words, or sequence of words, or sequence of tokens), the recognition result is passed to natural language processing module 732 for intent deduction. In some examples, STT processing module 730 produces multiple candidate text representations of the speech input. Each candidate text representation is a sequence of words or tokens corresponding to the speech input. In some examples, each candidate text representation is associated with a speech recognition confidence score. Based on the speech recognition confidence scores, STT processing module 730 ranks the candidate text representations and provides the n-best (e.g., n highest ranked) candidate text representation(s) to natural language processing module 732 for intent deduction, where n is a predetermined integer greater than zero. For example, in one example, only the highest ranked (n=1) candidate text representation is passed to natural language processing module 732 for intent deduction. In another example, the five highest ranked (n=5) candidate text representations are passed to natural language processing module 732 for intent deduction.

More details on the speech-to-text processing are described in U.S. Utility Application Serial No. 13/236,942 for "Consolidating Speech Recognition Results," filed on September 20, 2011.

In some examples, STT processing module 730 includes and/or accesses a vocabulary of recognizable words via phonetic alphabet conversion module 731. Each vocabulary word is associated with one or more candidate pronunciations of the word represented in a speech recognition phonetic alphabet. In particular, the vocabulary of recognizable words includes a word that is associated with a plurality of candidate pronunciations. For example, the vocabulary includes the word "tomato" that is associated with the candidate pronunciations of 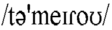 and /ta'matou/. Further, vocabulary words are associated with custom candidate pronunciations that are based on previous speech inputs from the user. Such custom candidate pronunciations are stored in STT processing module 730 and are associated with a particular user via the user's profile on the device. In some examples, the candidate pronunciations for words are determined based on the spelling of the word and one or more linguistic and/or phonetic rules. In some examples, the candidate pronunciations are manually generated, e.g., based on known canonical pronunciations.

In some examples, the candidate pronunciations are ranked based on the commonness of the candidate pronunciation. For example, the candidate pronunciation /ta'meiroo/ is ranked higher than /ta'matoo/, because the former is a more commonly used pronunciation (e.g., among all users, for users in a particular geographical region, or for any other appropriate subset of users). In some examples, candidate pronunciations are ranked based on whether the candidate pronunciation is a custom candidate pronunciation associated with the user. For example, custom candidate pronunciations are ranked higher than canonical candidate pronunciations. This can be useful for recognizing proper nouns having a unique pronunciation that deviates from canonical pronunciation. In some examples, candidate pronunciations are associated with one or more speech characteristics, such as geographic origin, nationality, or ethnicity. For example, the candidate pronunciation 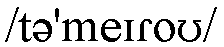 is associated with the United States, whereas the candidate pronunciation 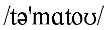 is associated with Great Britain. Further, the rank of the candidate pronunciation is based on one or more characteristics (e.g., geographic origin, nationality, ethnicity, etc.) of the user stored in the user's profile on the device. For example, it can be determined from the user's profile that the user is associated with the United States. Based on the user being associated with the United States, the candidate pronunciation 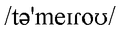 (associated with the United States) is ranked higher than the candidate pronunciation 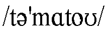 (associated with Great Britain). In some examples, one of the ranked candidate pronunciations is selected as a predicted pronunciation (e.g., the most likely pronunciation).

When a speech input is received, STT processing module 730 is used to determine the phonemes corresponding to the speech input (e.g., using an acoustic model), and then attempt to determine words that match the phonemes (e.g., using a language model). For example, if STT processing module 730 first identifies the sequence of phonemes /to'meiroo/ corresponding to a portion of the speech input, it can then determine, based on vocabulary index 744, that this sequence corresponds to the word "tomato."

In some examples, STT processing module 730 uses approximate matching techniques to determine words in an utterance. Thus, for example, the STT processing module 730 determines that the sequence of phonemes 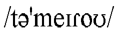 corresponds to the word "tomato," even if that particular sequence of phonemes is not one of the candidate sequence of phonemes for that word.

Natural language processing module 732 ("natural language processor") of the digital assistant takes the n-best candidate text representation(s) ("word sequence(s)" or "token sequence(s)") generated by STT processing module 730, and attempts to associate each of the candidate text representations with one or more "actionable intents" recognized by the digital assistant. An "actionable intent" (or "user intent") represents a task that can be performed by the digital assistant, and can have an associated task flow implemented in task flow models 754. The associated task flow is a series of programmed actions and steps that the digital assistant takes in order to perform the task. The scope of a digital assistant's capabilities is dependent on the number and variety of task flows that have been implemented and stored in task flow models 754, or in other words, on the number and variety of "actionable intents" that the digital assistant recognizes. The effectiveness of the digital assistant, however, also dependents on the assistant's ability to infer the correct "actionable intent(s)" from the user request expressed in natural language.

In some examples, in addition to the sequence of words or tokens obtained from STT processing module 730, natural language processing module 732 also receives contextual information associated with the user request, e.g., from I/O processing module 728. The natural language processing module 732 optionally uses the contextual information to clarify, supplement, and/or further define the information contained in the candidate text representations received from STT processing module 730. The contextual information includes, for example, user preferences, hardware, and/or software states of the user device, sensor information collected before, during, or shortly after the user request, prior interactions (e.g., dialogue) between the digital assistant and the user, and the like. As described herein, contextual information is, in some examples, dynamic, and changes with time, location, content of the dialogue, and other factors.

In some examples, the natural language processing is based on, e.g., ontology 760. Ontology 760 is a hierarchical structure containing many nodes, each node representing either an "actionable intent" or a "property" relevant to one or more of the "actionable intents" or other "properties." As noted above, an "actionable intent" represents a task that the digital assistant is capable of performing, i.e., it is "actionable" or can be acted on. A "property" represents a parameter associated with an actionable intent or a sub-aspect of another property. A linkage between an actionable intent node and a property node in ontology 760 defines how a parameter represented by the property node pertains to the task represented by the actionable intent node.

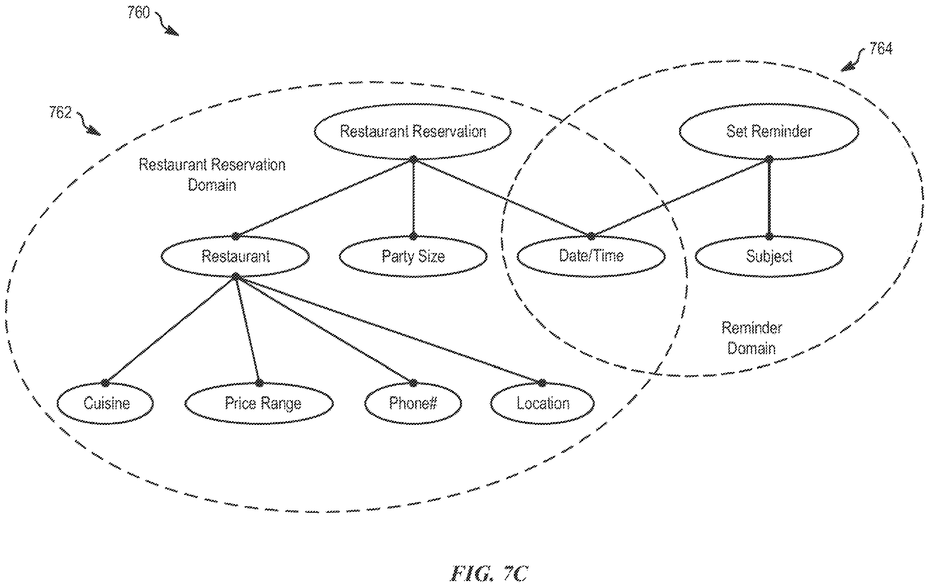

In some examples, ontology 760 is made up of actionable intent nodes and property nodes. Within ontology 760, each actionable intent node is linked to one or more property nodes either directly or through one or more intermediate property nodes. Similarly, each property node is linked to one or more actionable intent nodes either directly or through one or more intermediate property nodes. For example, as shown in FIG. 7C, ontology 760 includes a "restaurant reservation" node (i.e., an actionable intent node). Property nodes "restaurant," "date/time" (for the reservation), and "party size" are each directly linked to the actionable intent node (i.e., the "restaurant reservation" node).

In addition, property nodes "cuisine," "price range," "phone number," and "location" are sub-nodes of the property node "restaurant," and are each linked to the "restaurant reservation" node (i.e., the actionable intent node) through the intermediate property node "restaurant." For another example, as shown in FIG. 7C, ontology 760 also includes a "set reminder" node (i.e., another actionable intent node). Property nodes "date/time" (for setting the reminder) and "subject" (for the reminder) are each linked to the "set reminder" node. Since the property "date/time" is relevant to both the task of making a restaurant reservation and the task of setting a reminder, the property node "date/time" is linked to both the "restaurant reservation" node and the "set reminder" node in ontology 760.

An actionable intent node, along with its linked concept nodes, is described as a "domain." In the present discussion, each domain is associated with a respective actionable intent, and refers to the group of nodes (and the relationships there between) associated with the particular actionable intent. For example, ontology 760 shown in FIG. 7C includes an example of restaurant reservation domain 762 and an example of reminder domain 764 within ontology 760. The restaurant reservation domain includes the actionable intent node "restaurant reservation," property nodes "restaurant," "date/time," and "party size," and sub-property nodes "cuisine," "price range," "phone number," and "location." Reminder domain 764 includes the actionable intent node "set reminder," and property nodes "subject" and "date/time." In some examples, ontology 760 is made up of many domains. Each domain shares one or more property nodes with one or more other domains. For example, the "date/time" property node is associated with many different domains (e.g., a scheduling domain, a travel reservation domain, a movie ticket domain, etc.), in addition to restaurant reservation domain 762 and reminder domain 764.

While FIG. 7C illustrates two example domains within ontology 760, other domains include, for example, "find a movie," "initiate a phone call," "find directions," "schedule a meeting," "send a message," and "provide an answer to a question," "read a list," "providing navigation instructions," "provide instructions for a task" and so on. A "send a message" domain is associated with a "send a message" actionable intent node, and further includes property nodes such as "recipient(s)," "message type," and "message body." The property node "recipient" is further defined, for example, by the sub-property nodes such as "recipient name" and "message address."

In some examples, ontology 760 includes all the domains (and hence actionable intents) that the digital assistant is capable of understanding and acting upon. In some examples, ontology 760 is modified, such as by adding or removing entire domains or nodes, or by modifying relationships between the nodes within the ontology 760.

In some examples, nodes associated with multiple related actionable intents are clustered under a "super domain" in ontology 760. For example, a "travel" super-domain includes a cluster of property nodes and actionable intent nodes related to travel. The actionable intent nodes related to travel includes "airline reservation," "hotel reservation," "car rental," "get directions," "find points of interest," and so on. The actionable intent nodes under the same super domain (e.g., the "travel" super domain) have many property nodes in common. For example, the actionable intent nodes for "airline reservation," "hotel reservation," "car rental," "get directions," and "find points of interest" share one or more of the property nodes "start location," "destination," "departure date/time," "arrival date/time," and "party size."

In some examples, each node in ontology 760 is associated with a set of words and/or phrases that are relevant to the property or actionable intent represented by the node. The respective set of words and/or phrases associated with each node are the so-called "vocabulary" associated with the node. The respective set of words and/or phrases associated with each node are stored in vocabulary index 744 in association with the property or actionable intent represented by the node. For example, returning to FIG. 7B, the vocabulary associated with the node for the property of "restaurant" includes words such as "food," "drinks," "cuisine," "hungry," "eat," "pizza," "fast food," "meal," and so on. For another example, the vocabulary associated with the node for the actionable intent of "initiate a phone call" includes words and phrases such as "call," "phone," "dial," "ring," "call this number," "make a call to," and so on. The vocabulary index 744 optionally includes words and phrases in different languages.

Natural language processing module 732 receives the candidate text representations (e.g., text string(s) or token sequence(s)) from STT processing module 730, and for each candidate representation, determines what nodes are implicated by the words in the candidate text representation. In some examples, if a word or phrase in the candidate text representation is found to be associated with one or more nodes in ontology 760 (via vocabulary index 744), the word or phrase "triggers" or "activates" those nodes. Based on the quantity and/or relative importance of the activated nodes, natural language processing module 732 selects one of the actionable intents as the task that the user intended the digital assistant to perform. In some examples, the domain that has the most "triggered" nodes is selected. In some examples, the domain having the highest confidence value (e.g., based on the relative importance of its various triggered nodes) is selected. In some examples, the domain is selected based on a combination of the number and the importance of the triggered nodes. In some examples, additional factors are considered in selecting the node as well, such as whether the digital assistant has previously correctly interpreted a similar request from a user.

User data 748 includes user-specific information, such as user-specific vocabulary, user preferences, user address, user's default and secondary languages, user's contact list, and other short-term or long-term information for each user. In some examples, natural language processing module 732 uses the user-specific information to supplement the information contained in the user input to further define the user intent. For example, for a user request "invite my friends to my birthday party," natural language processing module 732 is able to access user data 748 to determine who the "friends" are and when and where the "birthday party" would be held, rather than requiring the user to provide such information explicitly in his/her request.

It should be recognized that in some examples, natural language processing module 732 is implemented using one or more machine learning mechanisms (e.g., neural networks). In particular, the one or more machine learning mechanisms are configured to receive a candidate text representation and contextual information associated with the candidate text representation. Based on the candidate text representation and the associated contextual information, the one or more machine learning mechanism are configured to determine intent confidence scores over a set of candidate actionable intents. Natural language processing module 732 can select one or more candidate actionable intents from the set of candidate actionable intents based on the determined intent confidence scores. In some examples, an ontology (e.g., ontology 760) is also used to select the one or more candidate actionable intents from the set of candidate actionable intents.

Other details of searching an ontology based on a token string are described in U.S. Utility Application Serial No. 12/341,743 for "Method and Apparatus for Searching Using An Active Ontology," filed December 22, 2008.

In some examples, once natural language processing module 732 identifies an actionable intent (or domain) based on the user request, natural language processing module 732 generates a structured query to represent the identified actionable intent. In some examples, the structured query includes parameters for one or more nodes within the domain for the actionable intent, and at least some of the parameters are populated with the specific information and requirements specified in the user request. For example, the user says "Make me a dinner reservation at a sushi place at 7." In this case, natural language processing module 732 is able to correctly identify the actionable intent to be "restaurant reservation" based on the user input. According to the ontology, a structured query for a "restaurant reservation" domain includes parameters such as {Cuisine}, {Time}, {Date}, {Party Size}, and the like. In some examples, based on the speech input and the text derived from the speech input using STT processing module 730, natural language processing module 732 generates a partial structured query for the restaurant reservation domain, where the partial structured query includes the parameters {Cuisine = "Sushi"} and {Time = "7pm"}. However, in this example, the user's utterance contains insufficient information to complete the structured query associated with the domain. Therefore, other necessary parameters such as {Party Size} and {Date} is not specified in the structured query based on the information currently available. In some examples, natural language processing module 732 populates some parameters of the structured query with received contextual information. For example, in some examples, if the user requested a sushi restaurant "near me," natural language processing module 732 populates a {location} parameter in the structured query with GPS coordinates from the user device.

In some examples, natural language processing module 732 identifies multiple candidate actionable intents for each candidate text representation received from STT processing module 730. Further, in some examples, a respective structured query (partial or complete) is generated for each identified candidate actionable intent. Natural language processing module 732 determines an intent confidence score for each candidate actionable intent and ranks the candidate actionable intents based on the intent confidence scores. In some examples, natural language processing module 732 passes the generated structured query (or queries), including any completed parameters, to task flow processing module 736 ("task flow processor"). In some examples, the structured query (or queries) for the m-best (e.g., m highest ranked) candidate actionable intents are provided to task flow processing module 736, where m is a predetermined integer greater than zero. In some examples, the structured query (or queries) for the m-best candidate actionable intents are provided to task flow processing module 736 with the corresponding candidate text representation(s).

Other details of inferring a user intent based on multiple candidate actionable intents determined from multiple candidate text representations of a speech input are described in U.S. Utility Application Serial No. 14/298,725 for "System and Method for Inferring User Intent From Speech Inputs," filed June 6, 2014.

Task flow processing module 736 is configured to receive the structured query (or queries) from natural language processing module 732, complete the structured query, if necessary, and perform the actions required to "complete" the user's ultimate request. In some examples, the various procedures necessary to complete these tasks are provided in task flow models 754. In some examples, task flow models 754 include procedures for obtaining additional information from the user and task flows for performing actions associated with the actionable intent.

As described above, in order to complete a structured query, task flow processing module 736 needs to initiate additional dialogue with the user in order to obtain additional information, and/or disambiguate potentially ambiguous utterances. When such interactions are necessary, task flow processing module 736 invokes dialogue flow processing module 734 to engage in a dialogue with the user. In some examples, dialogue flow processing module 734 determines how (and/or when) to ask the user for the additional information and receives and processes the user responses. The questions are provided to and answers are received from the users through I/O processing module 728. In some examples, dialogue flow processing module 734 presents dialogue output to the user via audio and/or visual output, and receives input from the user via spoken or physical (e.g., clicking) responses. Continuing with the example above, when task flow processing module 736 invokes dialogue flow processing module 734 to determine the "party size" and "date" information for the structured query associated with the domain "restaurant reservation," dialogue flow processing module 734 generates questions such as "For how many people?" and "On which day?" to pass to the user. Once answers are received from the user, dialogue flow processing module 734 then populates the structured query with the missing information, or pass the information to task flow processing module 736 to complete the missing information from the structured query.

Once task flow processing module 736 has completed the structured query for an actionable intent, task flow processing module 736 proceeds to perform the ultimate task associated with the actionable intent. Accordingly, task flow processing module 736 executes the steps and instructions in the task flow model according to the specific parameters contained in the structured query. For example, the task flow model for the actionable intent of "restaurant reservation" includes steps and instructions for contacting a restaurant and actually requesting a reservation for a particular party size at a particular time. For example, using a structured query such as: {restaurant reservation, restaurant = ABC Café, date = 3/12/2012, time = 7pm, party size = 5}, task flow processing module 736 performs the steps of: (1) logging onto a server of the ABC Café or a restaurant reservation system such as OPENTABLE^{®}, (2) entering the date, time, and party size information in a form on the website, (3) submitting the form, and (4) making a calendar entry for the reservation in the user's calendar.

In some examples, task flow processing module 736 employs the assistance of service processing module 738 ("service processing module") to complete a task requested in the user input or to provide an informational answer requested in the user input. For example, service processing module 738 acts on behalf of task flow processing module 736 to make a phone call, set a calendar entry, invoke a map search, invoke or interact with other user applications installed on the user device, and invoke or interact with third-party services (e.g., a restaurant reservation portal, a social networking website, a banking portal, etc.). In some examples, the protocols and application programming interfaces (API) required by each service are specified by a respective service model among service models 756. Service processing module 738 accesses the appropriate service model for a service and generate requests for the service in accordance with the protocols and APIs required by the service according to the service model.

For example, if a restaurant has enabled an online reservation service, the restaurant submits a service model specifying the necessary parameters for making a reservation and the APIs for communicating the values of the necessary parameter to the online reservation service. When requested by task flow processing module 736, service processing module 738 establishes a network connection with the online reservation service using the web address stored in the service model, and send the necessary parameters of the reservation (e.g., time, date, party size) to the online reservation interface in a format according to the API of the online reservation service.

In some examples, natural language processing module 732, dialogue flow processing module 734, and task flow processing module 736 are used collectively and iteratively to infer and define the user's intent, obtain information to further clarify and refine the user intent, and finally generate a response (i.e., an output to the user, or the completion of a task) to fulfill the user's intent. The generated response is a dialogue response to the speech input that at least partially fulfills the user's intent. Further, in some examples, the generated response is output as a speech output. In these examples, the generated response is sent to speech synthesis processing module 740 (e.g., speech synthesizer) where it can be processed to synthesize the dialogue response in speech form. In yet other examples, the generated response is data content relevant to satisfying a user request in the speech input.

In examples where task flow processing module 736 receives multiple structured queries from natural language processing module 732, task flow processing module 736 initially processes the first structured query of the received structured queries to attempt to complete the first structured query and/or execute one or more tasks or actions represented by the first structured query. In some examples, the first structured query corresponds to the highest ranked actionable intent. In other examples, the first structured query is selected from the received structured queries based on a combination of the corresponding speech recognition confidence scores and the corresponding intent confidence scores. In some examples, if task flow processing module 736 encounters an error during processing of the first structured query (e.g., due to an inability to determine a necessary parameter), the task flow processing module 736 can proceed to select and process a second structured query of the received structured queries that corresponds to a lower ranked actionable intent. The second structured query is selected, for example, based on the speech recognition confidence score of the corresponding candidate text representation, the intent confidence score of the corresponding candidate actionable intent, a missing necessary parameter in the first structured query, or any combination thereof.

Speech synthesis processing module 740 is configured to synthesize speech outputs for presentation to the user. Speech synthesis processing module 740 synthesizes speech outputs based on text provided by the digital assistant. For example, the generated dialogue response is in the form of a text string. Speech synthesis processing module 740 converts the text string to an audible speech output. Speech synthesis processing module 740 uses any appropriate speech synthesis technique in order to generate speech outputs from text, including, but not limited, to concatenative synthesis, unit selection synthesis, diphone synthesis, domain-specific synthesis, formant synthesis, articulatory synthesis, hidden Markov model (HMM) based synthesis, and sinewave synthesis. In some examples, speech synthesis processing module 740 is configured to synthesize individual words based on phonemic strings corresponding to the words. For example, a phonemic string is associated with a word in the generated dialogue response. The phonemic string is stored in metadata associated with the word. Speech synthesis processing module 740 is configured to directly process the phonemic string in the metadata to synthesize the word in speech form.

In some examples, instead of (or in addition to) using speech synthesis processing module 740, speech synthesis is performed on a remote device (e.g., the server system 108), and the synthesized speech is sent to the user device for output to the user. For example, this can occur in some implementations where outputs for a digital assistant are generated at a server system. And because server systems generally have more processing power or resources than a user device, it is possible to obtain higher quality speech outputs than would be practical with client-side synthesis.

Additional details on digital assistants can be found in the U.S. Utility Application No. 12/987,982, entitled "Intelligent Automated Assistant," filed January 10, 2011, and U.S. Utility Application No. 13/251,088, entitled "Generating and Processing Task Items That Represent Tasks to Perform," filed September 30, 2011.

With reference back to FIG. 7A, digital assistant module 726 further includes audio processing module 770 and latency management module 780. Audio processing module 770 is configured to analyze a stream of audio received by digital assistant system 700 (e.g., at I/O processing module 728 and via microphone 213). In some examples, audio processing module 770 is configured to analyze the stream of audio to identify which portions contain user speech and which portions do not contain user speech. For example, audio processing module 770 divides the stream of audio into a sequence of overlapping audio frames. Each audio frame has a predetermined duration (e.g., 10ms). Audio processing module 770 analyzes the audio features of each audio frame (e.g., using audio and/or speech models) to determine whether or not each audio frame contains user speech. The analyzed audio features can include time domain and/or frequency domain features. Time domain features include, for example, zero-crossing rates, short-time energy, spectral energy, spectral flatness, autocorrelation, or the like. Frequency domain features include, for example, mel-frequency cepstral coefficients, linear predictive cepstral coefficients, mel-frequency discrete wavelet coefficients, or the like. In some examples, audio processing module 770 provides audio frame information indicating which audio frames of the stream of audio contain user speech and which audio frames of the stream of audio do not contain user speech to other components of digital assistant module 726.

In some examples, latency management module 780 receives the audio frame information from audio processing module 770. Latency management module 780 uses this information to control the timing of various digital assistant processes to reduce latency. For example, latency management module 780 uses the audio frame information to detect pauses or interruptions in user speech in the stream of audio. In addition, the duration of each pause or interruption can be determined. In some examples, latency management module 780 applies one or more predetermined rules to determine whether a first portion of the stream of audio satisfies a predetermined condition. In some examples, the predetermined condition includes the condition of detecting, in the first portion of the stream of audio, an absence of user speech (e.g., a pause) for longer than a first predetermined duration (e.g., 50ms, 75ms, or 100ms). In response to determining that the first portion of the stream of audio satisfies a predetermined condition, latency management module 780 initiates performance of natural language processing (e.g., at natural language processing module 732), task flow processing (e.g., at task flow processing module 736 or 836), and/or speech synthesis (e.g., at speech synthesis processing module 740) based on the user utterance contained in the first portion of the stream of audio. In some examples, latency management module 780 initiates performance of these processes while causing the digital assistant system to continue receiving a second portion of the stream of audio.

In some examples, latency management module 780 is configured to detect a speech end-point condition. Specifically, after determining that the first portion of the stream of audio satisfies a predetermined condition, latency management module 780 determines whether a speech end-point condition is detected. In some examples, latency management module 780 uses the audio frame information to determine whether a speech end-point condition is detected. For example, detecting the speech end-point condition can include detecting, in the second portion of the stream of audio, an absence of user speech for greater than a second predetermined duration (e.g., 600ms, 700ms, or 800ms). The second predetermined duration is longer than the first predetermined duration. In some examples, detecting the speech end-point condition includes detecting a predetermined type of non-speech input from the user. For example, the predetermined type of non-speech input can be a user selection of a button (e.g., "home" or menu button 304) of the electronic device or an affordance displayed on the touch screen (e.g., touch screen 212) of the electronic device. In response to determining that a speech end-point condition is detected, latency management module 780 causes results generated by task flow processing module 736 or 836, dialogue flow processing module 734, and/or speech synthesis processing module 740 to be presented to the user. In some examples, the results include spoken dialogue. In some examples, latency management module 780 prevents the generated results from being presented to the user prior to determining that a speech end-point condition is detected.

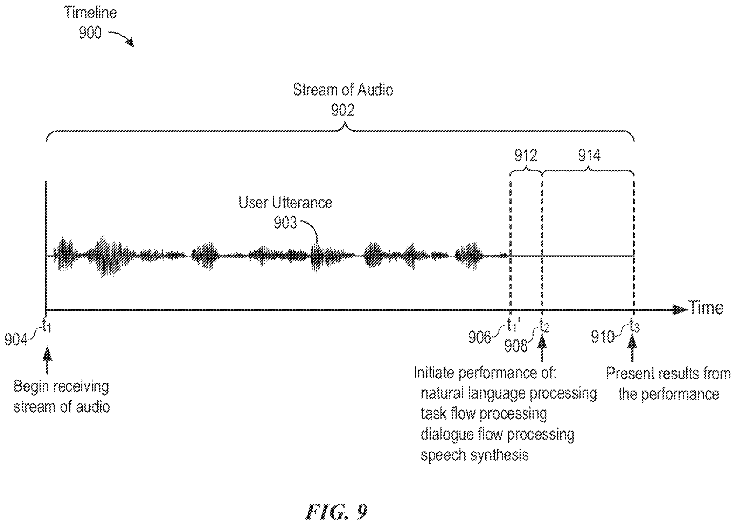

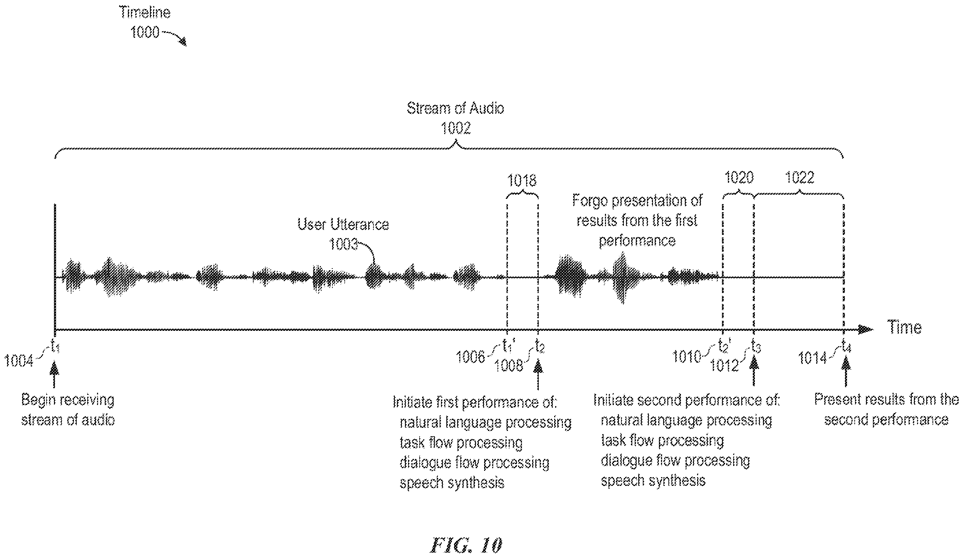

In some examples, latency management module 780 determines that a speech end-point condition is not detected. Instead, latency management module 780 detects additional speech in the second portion of the stream of audio. Specifically, for example, the additional speech is a continuation of the utterance in the first portion of the stream of audio. In these examples, latency management module 780 re-initiates performance of natural language processing, task flow processing, and/or speech synthesis based on the user utterance across the first and second portions of the stream of audio. The latency reducing functions of latency management module 780 are described in greater detail below with reference to FIGS. 9 and 10.

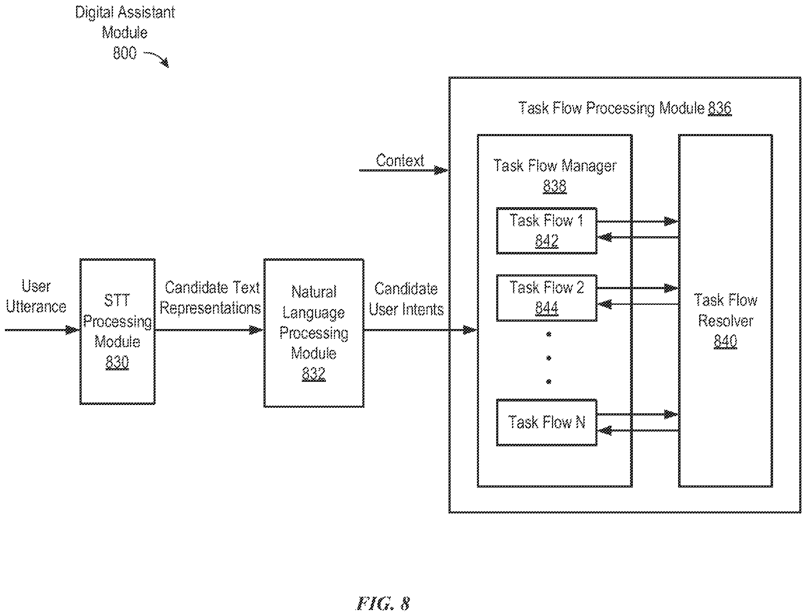

FIG. 8 is a block diagram illustrating a portion of digital assistant module 800, according to various examples. In particular, FIG. 8 depicts certain components of digital assistant module 800 that can enable robust operation of a digital assistant, according to various examples. More specifically, the components depicted in digital assistant module 800 can function to evaluate multiple candidate task flows corresponding to a user utterance and improve the robustness and reliability of task flow processing. For simplicity, only a portion of digital assistant module 800 is depicted. It should be recognized that digital assistant module 800 can include additional components. For example, digital assistant module 800 can be similar or substantially identical to digital assistant module 726 and can reside in memory 702 of digital assistant system 700.

As shown in FIG. 8, STT processing module 830 receives a user utterance (e.g., via I/O processing module 728). STT processing module 830 is similar or substantially identical to STT processing module 730. In an illustrative example, the received user utterance is "Directions to Fidelity Investments." STT processing module 830 performs speech recognition on the user utterance to determine a plurality of candidate text representations. Each candidate text representation of the plurality of candidate text representations corresponds to the user utterance. STT processing module 830 further determines an associated speech recognition confidence score for each candidate text representation. In some examples, the determined plurality of candidate text representations are the n-best candidate text representations having the n-highest speech recognition confidence scores. In the present example, STT processing module 830 determines three candidate text representations for the user utterance, which include "Directions to Fidelity Investments," "Directions to deli restaurants," and "Directions to Italian restaurants." The candidate text representation "Directions to Fidelity Investments" can have the highest speech recognition confidence score and the candidate text representations "Directions to deli restaurants" and "Directions to Italian restaurants" can have lower speech recognition confidence scores.

STT processing module 830 provides the three candidate text representations and the associated speech recognition confidence scores to natural language processing module 832. Natural language processing module 832 can be similar or substantially identical to natural language processing module 732. Based on the three candidate text representations, natural language processing module 832 determines corresponding candidate user intents. Each candidate user intent is determined from a respective candidate text representation. Natural language processing module 832 further determines an associated intent confidence score for each candidate user intent.

Determining a candidate user intent from a respective candidate text representation includes, for example, parsing the respective candidate text representation to determine a candidate domain and candidate parse interpretations for the candidate text representation. The determined candidate user intent can be represented in the form of a structured query based on the determined candidate domain and parse interpretations. For instance, in the present example, natural language processing module 832 parses the candidate text interpretation "Directions to Fidelity Investments" to determine that a candidate domain is "get directions." In addition, natural language processing module 832 recognizes that "Fidelity Investments" is an entry in the user's contact list and thus interprets it as a person/entity of the contact list (contacts = "Fidelity Investment"). Thus, a first candidate user intent determined for the candidate text interpretation "Directions to Fidelity Investments" can be represented by the structured query {Get directions, location = search(contacts = "Fidelity Investments")}. In some examples, natural language processing module 832 can also interpret "Fidelity Investments" as a business. Thus, a second candidate user intent determined for the candidate text interpretation "Directions to Fidelity Investments" can be represented by the structured query {Get directions, location = search(contacts= "Fidelity Investments")}.

The candidate text representations "Directions to deli restaurants" and "Directions to Italian restaurants" can similarly be parsed by natural language processing module 832 to determine respective candidate user intents. Specifically, natural language processing module 832 can interpret "deli" and "Italian" as types of cuisine associated with restaurants. Thus, candidate user intents determined for these candidate text interpretations can be represented by the structured queries {Get directions, location = search(restaurant, cuisine= "deli")} and {Get directions, location = search(restaurant, cuisine= "Italian")}, respectively.

Therefore, in the present example, natural language processing module 832 determines four candidate user intents from the three candidate text representations. The four candidate user intents are represented by the following respective structured queries:
1. {Get directions, location = search(contacts= "Fidelity Investments")}
2. {Get directions, location = search(business= "Fidelity Investments")}
3. {Get directions, location = search(restaurant, cuisine= "deli")}
4. {Get directions, location = search(restaurant, cuisine= "Italian")}
Each of the four candidate user intents has an associated intent confidence score. In this example, the four candidate user intents are arranged in decreasing order of intent confidence scores, with the first candidate user intent having the highest intent confidence score and the fourth candidate user intent having the lowest intent confidence score. Although in the present example, each of the determined candidate user intents has the same inferred domain ("get directions"), it should be recognized that, in other examples, the determined candidate user intents can include a plurality of different inferred domains.

Natural language processing module 832 provides the four candidate user intents to task flow processing module 836. For example, the structured queries for the four candidate user intents are provided to task flow processing module 836. In addition, the associated speech recognition confidence scores and intent confidence scores are provided to task flow processing module 836. In some examples, task flow processing module 836 is similar or substantially identical to task flow processing module 736.

In some examples, task flow manager 838 of task flow processing module 836 initially only selects one of the four candidate user intents for processing. If task flow manager 838 determines that the initially selected candidate user intent cannot be successfully processed through task flow processing module 836, task flow manager 838 selects another candidate user intent for processing. For example, the first candidate user intent having the highest intent confidence score is initially selected. Specifically, in the present example, the first candidate user intent represented by the structured query {Get directions, location = search(contacts= "Fidelity Investments")} is selected by task flow manager 838. Task flow manager 838 maps the first candidate user intent to a corresponding first candidate task flow (e.g., first candidate task flow 842). Notably, the structured query for the first candidate user intent is incomplete because it does not contain any value for the "location" property. As a result, the "location" task parameter in the corresponding first candidate task flow can be missing a required value for performing the task of getting directions to a location corresponding to "Fidelity Investments." In this example, the first candidate task flow includes procedures for resolving the "location" task parameter. Specifically, the first candidate task flow includes procedures for searching the "Fidelity Investments" entry of the user's contact list to obtain a corresponding value (e.g., address value) for the "location" task parameter.

In some examples, task flow manager 838 determines a corresponding first task flow score for the first candidate task flow. The first task flow score can represent the likelihood that the corresponding candidate task flow is the correct candidate task flow to perform given the user utterance. In some examples, the first task flow score is based on a first flow parameter score. The first flow parameter score can represent a confidence of resolving one or more flow parameters for the first candidate task flow. In some examples, the first task flow score is based on any combination of a speech recognition confidence score for the corresponding candidate text representation "Directions to Fidelity Investments," an intent confidence score for the first candidate user intent, and a first task parameter score.

Task flow resolver 840 determines the first flow parameter score by attempting to resolve the missing "location" flow parameter for the first candidate task flow. In the present example, task flow resolver 840 attempts to search the "Fidelity Investments" entry of the user's contact list to obtain a value (e.g., address value) for the "location" flow parameter. If task flow resolver 840 successfully resolves the "location" flow parameter by obtaining a value from the "Fidelity Investments" entry of the user's contact list, task flow resolver 840 can determine a higher value for the first flow parameter score. However, if task flow resolver 840 is unable to successfully resolve the "location" flow parameter (e.g., no address value is found in the "Fidelity Investments" entry of the user's contact list), task flow resolver 840 can determine a lower value for the first flow parameter score. Thus, the first flow parameter score can be indicative of whether one or more flow parameters of the first candidate task flow (e.g., the "location" parameter) can be successfully resolved. In some examples, task flow resolver 840 can utilize context data to attempt to resolve missing flow parameters.

In some examples, task flow manager 838 determines whether the first task flow score satisfies a predetermined criterion (e.g., greater than a predetermined threshold level). In the example where task flow resolver 840 successfully resolves the "location" flow parameter, the first flow parameter score can be sufficiently high to enable the first task flow score to satisfy the predetermined criterion. In this example, task flow manager 838 determines that the first task flow score satisfies the predetermined criterion and in response, task flow manager 838 executes the corresponding first candidate task flow without processing the remaining three candidate user intents. In the present example, executing the first candidate task flow can include searching for directions to the address obtained from the "Fidelity Investments" entry of the user's contact list and displaying the directions to the user on the electronic device. In some examples, executing the first candidate task flow further includes generating a dialogue text that is responsive to the user utterance and outputting a spoken representation of the dialogue text. For example, the outputted spoken representation of the dialogue text can be "OK, here are directions to Fidelity Investments."

In the alternative example where task flow resolver 840 is unable to successfully resolve the "location" flow parameter, the first flow parameter score can be sufficiently low to result in the first task flow score not satisfying the predetermined criterion. In this example, task flow manager 838 forgoes executing the corresponding first candidate task flow and proceeds to select a second candidate user intent for processing. For example, the second candidate user intent having the second highest intent confidence score can be selected. In the present example, the selected second candidate user intent is represented by the second structured query {Get directions, location = search(business= "Fidelity Investments")}.

Task flow manager 838 maps the second candidate user intent to a corresponding second candidate task flow (e.g., second candidate task flow 844). The second candidate task flow is processed in a similar manner as the first candidate task flow. Specifically, task flow resolver 840 determines a second flow parameter score for the second candidate task flow by attempting to resolve one or more missing task parameters for the second candidate task flow. For example, task flow resolver 840 attempts to search one or more "business" data sources (e.g., a business directory) to obtain an address value corresponding to the business "Fidelity Investments." The determined second flow parameter score is based on whether task flow resolver 840 can successfully resolve the "location" flow parameter by searching the "business" data source. Based on the second flow parameter score, task flow manager 838 determines a second task flow score for the second candidate task flow. In some examples, the second task flow score is further based on the speech recognition confidence score for the corresponding candidate text representation "Directions to Fidelity Investments" and/or the intent confidence score for the second candidate user intent. If task flow manager 838 determines that the second task flow score satisfies the predetermined criterion, then the second candidate task flow is executed. However, if task flow manager 838 determines that the second task flow score does not satisfy the predetermined criterion, then task flow manager 838 forgoes executing the second candidate task flow and continues to evaluate the third candidate user intent (and if necessary, the fourth candidate user intent) until a corresponding candidate task flow is determined to have an associated task flow score that satisfies the predetermined criterion.

Although in the examples described above, task flow processing module 836 evaluates the candidate user intents serially to determine a candidate task flow having an associated task flow score that satisfies the predetermined criterion, it should be recognized that, in other examples, task flow processing module 836 can evaluate the candidate user intents in parallel. In these examples, task flow manager 838 maps each of the four candidate user intents to four respective candidate task flows. Task flow manager 838 then determines a respective task flow score for each candidate task flow. As discussed above, task flow processing module 836 determines each task flow score based on the speech recognition confidence score for the respective candidate text representation, the intent confidence score for the respective candidate user intent, the respective task parameter score, or any combination thereof. Task flow processing module 836 determines each respective task parameter score by attempting to resolve one or more missing task parameters for the respective candidate task flow. Based on the determined task flow scores for the four candidate task flows, task flow manager 838 ranks the four candidate task flows and selects the highest ranking candidate task flow. Task flow manager 838 then executes the selected candidate task flow.

In some examples, the highest ranking candidate task flow is the candidate task flow with the highest task flow score. In the present example, the highest ranking candidate task flow can correspond to the second candidate user intent represented by the structured query {Get directions, location = search(business= "Fidelity Investments")}. Thus, in the present example, Task flow manager 838 can execute the second candidate user intent, which can include obtaining directions to a "Fidelity Investments" address obtained by searching one or more business data sources and presenting the directions to the user (e.g., by displaying a map with the directions).

It should be appreciated that, in some examples, the selected highest ranking candidate task flow need not correspond to the candidate user intent with the highest intent confidence score. For instance, in the present example, the selected second candidate task flow corresponds to the second candidate user intent (e.g., represented by the structured query {Get directions, location = search(business= "Fidelity Investments")}), which does not have the highest intent confidence score. Further, in some examples, the selected highest ranking candidate task flow need not correspond to the candidate text representations with the highest speech recognition confidence score. Because the task flow score can be based on a combination of speech recognition confidence scores, intent confidence scores, and flow parameter scores, using the task flow scores to select a suitable candidate task flow can enable a candidate task flow that represents an optimization of speech recognition, natural language processing, and task flow processing to be selected. As a result, the selected candidate task flow can be more likely to coincide with the user's actual desired goal for providing the user utterance and less likely to fail (e.g., causes a fatal error) during execution.

FIGS. 9 and 10 are timelines 900 and 1000 illustrating the timing for low-latency operation of a digital assistant, according to various examples. In some examples, the timing for low-latency operation of a digital assistant is controlled using a latency management module (e.g., latency management module 780) of a digital assistant module (e.g., digital assistant module 726). FIGS. 9 and 10 are described with references to digital assistant system 700 of FIGS. 7A and 7B.

As shown in FIG. 9, digital assistant system 700 begins receiving stream of audio 902 at first time 904. For example, digital assistant system 700 begins receiving stream of audio 902 at first time 904 in response to receiving user input that invokes digital assistant system 700. In this example, stream of audio 902 is continuously received from first time 904 to third time 910. Specifically, a first portion of stream of audio 902 is received from first time 904 to second time 908 and a second portion of stream of audio 902 is received from second time 908 to third time 910. As shown, the first portion of stream of audio 902 includes user utterance 903.

In some examples, digital assistant system 700 performs speech recognition as stream of audio 902 is being received. For example, latency management module 780 causes STT processing module 730 to beginning performing speech recognition in real-time as stream of audio 902 is being received. STT processing module 730 determines one or more first candidate text representations for user utterance 903.

Latency management module 780 determines whether the first portion of stream of audio 902 satisfies a predetermined condition. For example, the predetermined condition can include the condition of detecting an absence of user speech in the first portion of stream of audio 902 for longer than a first predetermined duration (e.g., 50ms, 75ms, or 100ms). It should be appreciated that, in other examples, the predetermined condition can include other conditions associated with the first portion of stream of audio 902. In the present example, as shown in FIG. 9, the first portion of stream of audio 902 contains an absence of user speech between first intermediate time 906 and second time 908. If latency management module 780 determines that this absence of user speech between first intermediate time 906 and second time 908 satisfies the predetermined condition (e.g., duration 912 is longer than the first predetermined duration), latency management module 780 causes the relevant components of digital assistant system 700 to initiate a sequence of processes that include natural language processing, task flow processing, dialogue flow processing, speech synthesis, or any combination thereof. Specifically, in the present example, in response to determining that the first portion of stream of audio 902 satisfies the predetermined condition, latency management module 780 causes natural language processing module 732 to begin performing, at second time 908, natural language processing on the one or more first candidate text representations. This can be advantageous because natural language processing, task flow processing, dialogue flow processing, or speech synthesis can be at least partially completed between second time 908 and third time 910 while digital assistant system 700 is awaiting the detection of a speech end-point condition. As a result, less processing can be required after the speech end-point condition is detected, which can reduce the response latency of digital assistant system 700.

As discussed above, latency management module 780 causes one or more of natural language processing, task flow processing, dialogue flow processing, and speech synthesis to be performed while the second portion of stream of audio 902 is being received between second time 908 and third time 910. Specifically, between second time 908 and third time 910, latency management module 780 causes natural language processing module 732 to determine one or more candidate user intents for user utterance 903 based on the one or more first candidate text representations. In some examples, latency management module 780 also causes task flow processing module 736 (or 836) to determine (e.g., at least partially between second time 908 and third time 910) one or more respective candidate task flows for the one or more candidate user intents and to select (e.g., at least partially between second time 908 and third time 910) a first candidate task flow from the one or more candidate task flows. In some examples, latency management module 780 further causes task flow processing module 736 (or 836) to execute (e.g., at least partially between second time 908 and third time 910) the selected first candidate task flow without providing an output to a user of digital assistant system 700 (e.g., without displaying any result or outputting any speech/audio on the user device).

In some examples, executing the first candidate task flow includes generating a text dialogue that is responsive to user utterance 903 and generating a spoken representation of the text dialogue. In these examples, latency management module 780 further causes dialogue flow processing module 734 to generate (e.g., at least partially between second time 908 and third time 910) the text dialogue and causes speech synthesis processing module 740 to generate (e.g., at least partially between second time 908 and third time 910) the spoken representation of the text dialogue.

In some examples, speech synthesis processing module 740 receives a request (e.g., from task flow processing module 736 or dialogue flow processing module 734) to generate the spoken representation of the text dialogue. In response to receiving the request, speech synthesis processing module 740 can determine (e.g., at least partially between second time 908 and third time 910) whether the memory (e.g., memory 202, 470, or 702) of the electronic device (e.g., server 106, device 104, device 200, or system 700) stores an audio file having a spoken representation of the text dialogue. In response to determining that the memory of the electronic device does store an audio file having a spoken representation of the text dialogue, speech synthesis processing module 740 awaits detection of an end-point condition before playing the stored audio file. In response to determining that the memory of the electronic device does not store an audio file having a spoken representation of the text dialogue, speech synthesis processing module 740 generates an audio file having a spoken representation of the text dialogue and stores the audio file in the memory. In some examples, generating and storing the audio file are at least partially performed between second time 908 and third time 910. After storing the audio file, speech synthesis processing module 740 awaits detection of a speech end-point condition before playing the stored audio file.

Latency management module 780 determines whether a speech end-point condition is detected between second time 908 and third time 910. For example, detecting the speech end-point condition can include detecting, in the second portion of stream of audio 902, an absence of user speech for longer than a second predetermined duration (e.g., 600ms, 700ms, or 800ms). It should be recognized that, in other examples, other speech end-point conditions can be implemented. In the present example, the second portion of stream of audio 902 between second time 908 and third time 910 does not contain any user speech. In addition, duration 914 between second time 908 and third time 910 is longer than the second predetermined duration. Thus, in this example, a speech end-point condition is detected between second time 908 and third time 910. In response to determining that a speech end-point condition is detected between the second time and the third time, latency management module 780 causes digital assistant system 700 to present (e.g., at fourth time 1014) the results obtained from executing the first candidate task flow. For example, the results can be displayed on a display of the electronic device. In some examples, latency management module 780 causes output of the spoken representation of the text dialogue to the user by causing a respective stored audio file to be played.

Because at least a portion of natural language processing, task flow processing, dialogue flow processing, and speech synthesis is performed prior to detecting the speech end-point condition, less processing can be required after the speech end-point condition is detected, which can reduce the response latency of digital assistant system 700. Specifically, the results obtained from executing the first candidate task flow can be presented more quickly after the speech end-point condition is detected.

In other examples, a speech end-point condition is not detected between second time 908 and third time 910. For example, with reference to timeline 1000 in FIG. 10, stream of audio 1002 contains user speech between second time 1008 and third time 1012. Thus, in this example, a speech end-point condition is not detected between second time 1008 and third time 1012. Timeline 1000 of FIG. 10 from first time 1004 to second time 1008 can be similar or substantially identical to timeline 900 of FIG. 9 from first time 904 to second time 908. In particular, the first portion of stream of audio 1002 containing user utterance 1003 is received from first time 1004 to second time 1008. Latency management module 780 determines that the absence of user speech between first intermediate time 1006 and second time 1008 satisfies the predetermined condition (e.g., duration 1018 is longer than the first predetermined duration) and in response, latency management module 780 causes the relevant components of digital assistant system 700 to initiate, for the first time, a sequence of processes that include natural language processing, task flow processing, dialogue flow processing, speech synthesis, or any combination thereof. Specifically, in response to determining that the first portion of stream of audio 1002 satisfies the predetermined condition, latency management module 780 causes natural language processing module 732 to begin performing, at second time 1008, natural language processing on one or more first candidate text representations of user utterance 1003 in the first portion of stream of audio 1002.

Timeline 1000 of FIG. 10 differs from timeline 900 of FIG. 9 in that user utterance 1003 continues from the first portion of stream of audio 1002 (between first time 1004 and second time 1008) to the second portion of stream of audio 1002 (between second time 1008 and third time 1012) and stream of audio 1002 further extends from third time 1012 to fourth time 1014. In this example, latency management module 780 determines that a speech end-point condition is not detected between second time 1008 and third time 1012 (e.g., due to detecting user speech) and in response, latency management module 780 causes digital assistant system 700 to forgo presentation of any results obtained from performing task flow processing between second time 1008 and third time 1012. In other words, the natural language processing, task flow processing, dialogue flow processing, or speech synthesis performed between second time 1008 and third time 1012 can be discarded upon detecting user speech in the second portion of stream of audio 1002. In addition, upon detecting user speech in the second portion of stream of audio 1002, latency management module 780 causes digital assistant system 700 to process the user speech (continuation of user utterance 1003) in the second portion of stream of audio 1002. Specifically, latency management module 780 causes STT processing module 730 to perform speech recognition on the second portion of stream of audio 1002 and determine one or more second candidate text representations. Each candidate text representation of the one or more second candidate text representations is a candidate text representation of user utterance 1003 across the first and second portions of stream of audio 1002 (e.g., from first time 1004 to third time 1012). Further, upon detecting user speech in the second portion of stream of audio 1002, latency management module 780 causes digital assistant system 700 to continue receiving stream of audio 1002 from third time 1012 to fourth time 1014. Specifically, a third portion of stream of audio 1002 is received from third time 1012 and fourth time 1014.

The second and third portions of stream of audio 1002 are processed in a similar manner as the first and second portions of stream of audio 902, described above with reference to FIG. 9. In particular, latency management module 780 determines whether the second portion of stream of audio 1002 satisfies the predetermined condition (e.g., absences of user speech for longer than a first predetermined duration). In the present example, as shown in FIG. 10, the second portion of stream of audio 1002 contains an absence of user speech between second intermediate time 1010 and third time 1012. If latency management module 780 determines that this absence of user speech between second intermediate time 1010 and third time 1012 satisfies the predetermined condition (e.g., duration 1020 is longer than the first predetermined duration), latency management module 780 causes the relevant components of digital assistant system 700 to initiate, for a second time, a sequence of processes that include natural language processing, task flow processing, dialogue flow processing, speech synthesis, or any combination thereof. Specifically, in the present example, in response to determining that the second portion of stream of audio 1002 satisfies the predetermined condition, latency management module 780 causes natural language processing module 732 to begin performing, at third time 1012, natural language processing on the one or more second candidate text representations.

As discussed above, latency management module 780 causes one or more of natural language processing, task flow processing, dialogue flow processing, and speech synthesis to be performed between third time 1012 and fourth time 1014. In particular, between third time 1012 and fourth time 1014, latency management module 780 causes natural language processing module 732 to determine, based on the one or more second candidate text representations, one or more second candidate user intents for user utterance 1003 in the first and second portions of stream of audio 1002. In some examples, latency management module 780 causes task flow processing module 736 (or 836) to determine (e.g., at least partially between third time 1012 and fourth time 1014) one or more respective second candidate task flows for the one or more second candidate user intents and to select (e.g., at least partially between third time 1012 and fourth time 1014) a second candidate task flow from the one or more second candidate task flows. In some examples, latency management module 780 further causes task flow processing module 736 (or 836) to execute (e.g., at least partially between third time 1012 and fourth time 1014) the selected second candidate task flow without providing an output to a user of the digital assistant system (e.g., without displaying any result or outputting any speech/audio on the user device).

Latency management module 780 determines whether a speech end-point condition is detected between third time 1012 and fourth time 1014. In the present example, the third portion of stream of audio 1002 between third time 1012 and fourth time 1014 does not contain any user speech. In addition, duration 1022 between third time 1012 and fourth time 1014 is longer than the second predetermined duration. Thus, in this example, a speech end-point condition is detected between third time 1012 and fourth time 1014. In response to determining that a speech end-point condition is detected between third time 1012 and fourth time 1014, latency management module 780 causes digital assistant system 700 to present (e.g., at fourth time 1014) the results obtained from executing the first candidate task flow. For example, the results can be displayed on a display of the electronic device. In other examples, presenting the results includes outputting spoken dialogue that is responsive to user utterance 1003. In these examples, the spoken dialogue can be at least partially generated between third time 1012 and fourth time 1014.

### 4. Process for operating a digital assistant

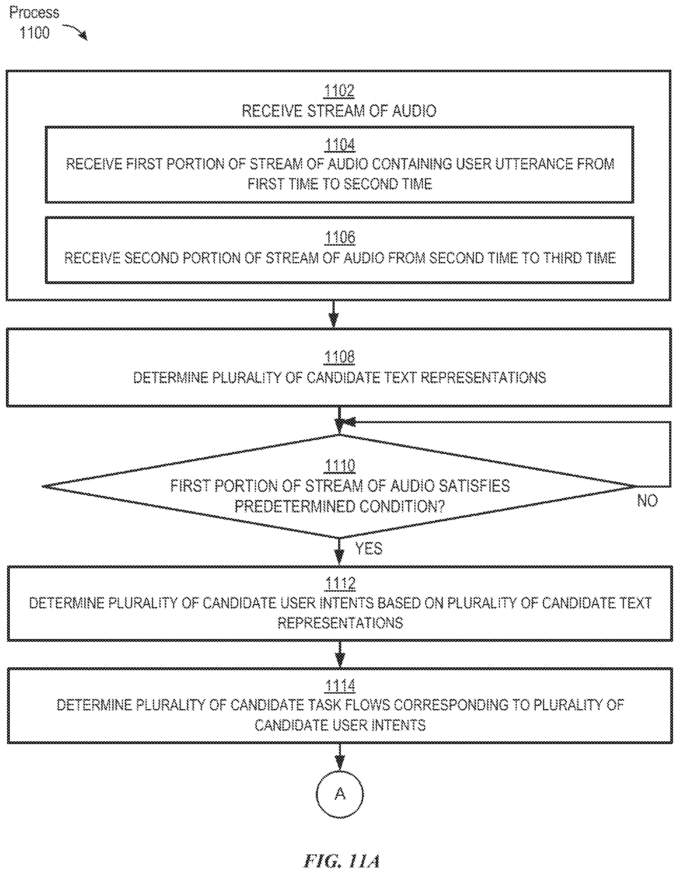

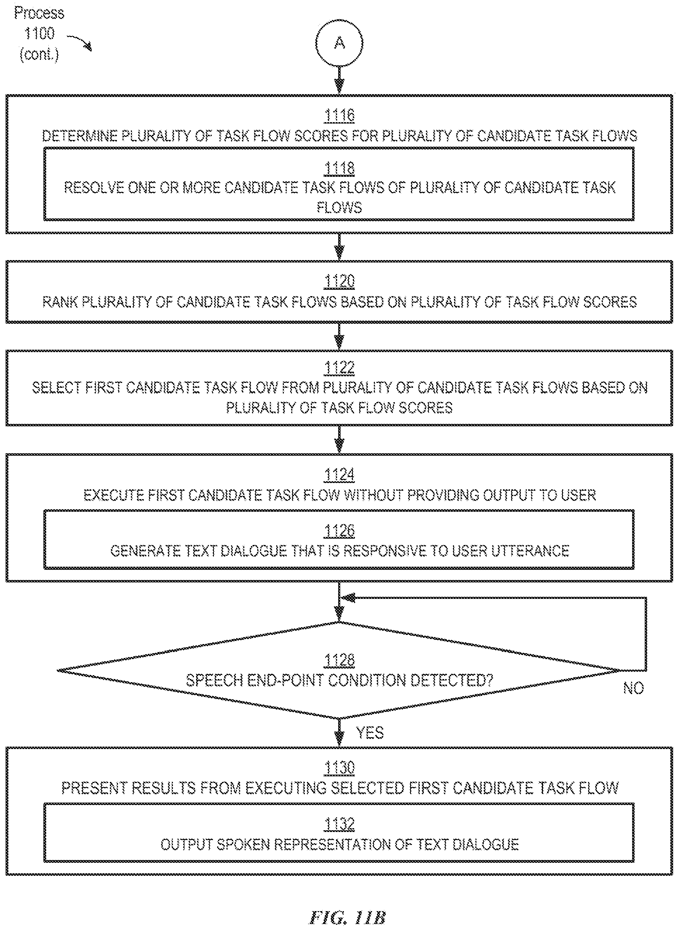

FIGS. 11A-11B illustrate process 1100 for operating a digital assistant, according to various examples. Some aspects of process 1100 relate to low-latency operation of a digital assistant. In addition, some aspects of process 1100 relate to more reliable and robust operation of a digital assistant. Process 1100 is performed, for example, using one or more electronic devices implementing a digital assistant. In some examples, process 1100 is performed using a client-server system (e.g., system 100), and the blocks of process 1100 are divided up in any manner between the server (e.g., DA server 106) and a client device (user device 104). In other examples, the blocks of process 1100 are divided up between the server and multiple client devices (e.g., a mobile phone and a smart watch). Thus, while portions of process 1100 are described herein as being performed by particular devices of a client-server system, it will be appreciated that process 1100 is not so limited. In other examples, process 1100 is performed using only a client device (e.g., user device 104) or only multiple client devices. In process 1100, some blocks are, optionally, combined, the order of some blocks is, optionally, changed, and some blocks are, optionally, omitted. In some examples, additional steps may be performed in combination with process 1100.

At block 1102, a stream of audio (e.g., stream of audio 902 or 1002) is received (e.g., at I/O processing module 728 via microphone 213). The stream of audio is received, for example, by activating a microphone (e.g., microphone 213) of the electronic device (e.g., user device 104) and initiating the collection of audio data via the microphone. Activation of the microphone and initiating collection of audio data can be performed in response to detecting a predetermined user input. For example, detecting the activation of a "home" affordance of the electronic device (e.g., by the user pressing and holding the affordance) can invoke the digital assistant and initiate the receiving of the stream of audio. In some examples, the stream of audio is a continuous stream of audio data. The stream of audio data can be continuously collected and stored in a buffer (e.g., buffer of audio circuitry 210).

In some examples, block 1102 is performed in accordance with blocks 1104 and 1106. Specifically, in these examples, the stream of audio is received across two time intervals. At block 1104, a first portion of the stream of audio is received from a first time (e.g., first time 904 or 1004) to a second time (e.g., second time 908 or 1008). The first portion of the stream of audio contains, for example, a user utterance (user utterance 903 or 1003). At block 1106, a second portion of the stream of audio is received from the second time (e.g., second time 908 or 1008) to a third time (e.g., third time 910 or 1012). The first time, second time, and third time are each specific points of time. The second time is after the first time and the third time is after the second time. In some examples, the stream of audio is continuously received from the first time through to the third time, wherein the first portion of the stream of audio is continuously received from the first time to the second time and the second portion of the stream of audio is continuously received from the second time to the third time.

At block 1108, a plurality of candidate text representations of the user utterance are determined (e.g., using STT processing module 730). The plurality of candidate text representations are determined by performing speech recognition on the stream of audio. Each candidate text representation is associated with a respective speech recognition confidence score. The speech recognition confidence scores can indicate the confidence that a particular candidate text representation is the correct text representation of the user utterance. In addition, the speech recognition confidence scores can indicate the confidence of any determined word in a candidate text representation of the plurality of candidate text representations. In some examples, the plurality of candidate text representations are the n-best candidate text representations having the n-highest speech recognition confidence scores.

In some examples, block 1108 is performed in real-time as the user utterance is being received at block 1104. In some examples, speech recognition is performed automatically upon receiving the stream of audio. In particular, words of the user utterance are decoded and transcribed as each portion of the user utterance is received. In these examples, block 1108 is performed prior to block 1110. In other examples, block 1108 is performed after block 1110 (e.g., performed in response to determining that the first portion of the stream of audio satisfies a predetermined condition).

At block 1110, a determination is made (e.g., using latency management module 780) as to whether the first portion of the stream of audio satisfies a predetermined condition. In some examples, the predetermined condition is a condition based on one or more audio characteristics of the stream of audio. The one or more audio characteristics include, for example, one or more time domain and/or frequency domain features of the stream of audio. Time domain features include, for example, zero-crossing rates, short-time energy, spectral energy, spectral flatness, autocorrelation, or the like. Frequency domain features include, for example, mel-frequency cepstral coefficients, linear predictive cepstral coefficients, mel-frequency discrete wavelet coefficients, or the like.

In some examples, the predetermined condition includes the condition of detecting, in the first portion of the stream of audio, an absence of user speech for longer than a first predetermined duration after the user utterance. Specifically, process 1100 can continuously monitor the first portion of the stream of audio (e.g., from the first time to the second time) and determine the start time and end time of the user utterances (e.g., using conventional speech detection techniques). If an absence of user speech is detected in the first portion of the stream of audio for longer than a first predetermined duration (e.g., 50ms, 75ms, or 100ms) after the end time of the user utterance, it can be determined that the first portion of the stream of audio satisfies the predetermined condition.

In some examples, the presence or absence of user speech is detected based on audio energy level (e.g., energy level of the stream of audio within a frequency range corresponding to human speech, such as 50-500Hz). In these examples, the predetermined condition includes the condition of detecting, in the first portion of the stream of audio, an audio energy level that is less than a predetermined threshold energy level for longer than a first predetermined duration after the end time of the user utterance.

In some examples, the predetermined condition includes a condition that relates to a linguistic characteristic of the user utterance. For example, the plurality of candidate text representations of block 1108 can be analyzed to determine whether an end-of-sentence condition is detected in the one or more candidate text representations. In some examples, the end-of-sentence condition is detected if the ending portions of the one or more candidate text representations match a predetermined sequence of words. In some examples, a language model is used to detect an end-of-sentence condition in the one or more candidate text representations.

In response to determining that the first portion of the stream of audio satisfies a predetermined condition, one or more of the operations of blocks 1112-1126 are performed. In particular, one or more of the operations of blocks 1112-1126 are performed automatically (e.g., without further input from the user) in response to determining that the first portion of the stream of audio satisfies a predetermined condition. Further, in response to determining that the first portion of the stream of audio satisfies a predetermined condition, one or more of the operations of blocks 1112-1126 are at least partially performed between the second time (e.g., second time 908 or 1008) and the third time (e.g., third time 910 or 1012) (e.g., while the second portion of the stream of audio is received at block 1106).

In response to determining that the first portion of the stream of audio does not satisfy a predetermined condition, block 1110 continues to monitor the first portion of the stream of audio (e.g., without performing blocks 1112-1126) until it is determined that the predetermined condition is satisfied by the first portion of the stream of audio.

Determining whether the first portion of the stream of audio satisfies a predetermined condition and performing, at least partially between the second time and the third time, one or more of the operations of blocks 1112-1126 in response to determining that the first portion of the stream of audio satisfies a predetermined condition can reduce the response latency of the digital assistant on the electronic device. In particular, the electronic device can at least partially complete these operations while waiting for the speech end-point condition to be detected. This can enhance operability of the electronic device by reducing the operations needed to be performed after detecting the speech end-point condition. In turn, this can reduce the overall latency between receiving the user utterance (block 1104) and presenting the results to the user (block 1130).

At block 1112, a plurality of candidate user intents for the user utterance are determined (e.g., using natural language processing module 732). In particular, natural language processing is performed on the one or more candidate text representations of block 1108 to determine the plurality of candidate user intents. Each candidate user intent of the plurality of candidate user intents is an actionable intent that represents one or more tasks, which when performed, would satisfy a predicted goal corresponding to the user utterance. In some examples, each candidate user intent is determined in the form of a structured query.

In some examples, each candidate text representation of the one or more candidate text representations of block 1108 is parsed to determine one or more respective candidate user intents. In some examples, the plurality of candidate user intents determined at block 1112 include candidate user intents corresponding to different candidate text representations. For example, at block 1112, a first candidate user intent of the plurality of candidate user intents can be determined from a first candidate text representation of block 1108 and a second candidate user intent of the plurality of candidate user intents can be determined from a second candidate text representation of block 1108.

In some examples, each candidate user intent is associated with a respective intent confidence score. The intent confidence scores can indicate the confidence that a particular candidate user intent is the correct user intent for the respective candidate text representation. In addition, the intent confidence scores can indicate the confidence of corresponding domains, actionable intents, concepts, or properties determined for the candidate user intents. In some examples, the plurality of candidate user intents are the m-best candidate user intents having the m-highest intent confidence scores.

At block 1114, a plurality of candidate task flows are determined (e.g., using task flow processing module 736 or 836) from the plurality of candidate user intents of block 1112. Specifically, each candidate user intent of the plurality of candidate user intents is mapped to a corresponding candidate task flow of the plurality of candidate task flows. Each candidate task flow includes procedures for performing one or more actions that fulfill the respective candidate user intent. For candidate user intents having incomplete structured queries (e.g., partial structured queries with one or more missing property values), the corresponding candidate task flows can include procedures for resolving the incomplete structured queries. For example, the candidate task flows can include procedures for determining one or more flow parameters (e.g., corresponding to the one or more missing property values) by searching one or more data sources or querying the user for additional information. Each candidate task flow further includes procedures for performing one or more actions represented by the corresponding candidate user intent (e.g., represented by the complete structured query of the candidate user intent).

At block 1116, a plurality of task flow scores are determined (e.g., using task flow processing module 736 or 836) for the plurality of candidate task flows. Each task flow score of the plurality of task flow scores corresponds to a respective candidate task flow of the plurality of candidate task flows. The task flow score for a respective candidate task flow can represent the likelihood that the respective candidate task flow is the correct candidate task flow to perform given the user utterance. For example, the task flow score can represent the likelihood that the user's actual desired goal for providing the user utterance is fulfilled by performing the respective candidate task flow.

In some examples, each task flow score is based on a flow parameter score for the respective candidate task flow. In these examples, block 1116 includes determining (e.g., using task flow manager 838) a respective flow parameter score for each candidate task flow. The flow parameter score for a respective candidate task flow can represent a confidence of resolving one or more flow parameters for the respective candidate task flow. In some examples, determining a flow parameter score for a respective candidate task flow includes resolving one or more flow parameters for the respective candidate task flow. Specifically, for each candidate task flow, process 1100 determines, at block 1118, whether the respective candidate task flow includes procedures for resolving one or more flow parameters. The one or more flow parameters can correspond, for example, to one or more missing property values of a corresponding incomplete structured query. In some examples, the one or more flow parameters are parameters that are not expressly specified in the user utterance. If process 1100 determines that the respective candidate task flow includes procedures for resolving one or more flow parameters, the procedures can be executed (e.g., using task flow resolver 840) to resolve the one or more flow parameters. In some examples, executing the procedures causes one or more data sources to be searched. In particular, the one or more data sources are searched to obtain one or more values for the one or more flow parameters. In some examples, the one or more data sources correspond to one or more properties of the respective candidate user intent.

If the one or more flow parameters for the respective candidate task flow can be resolved (e.g., by successfully obtaining one or more values for the one or more flow parameters from the one or more data sources), then the flow parameter score determined for the respective candidate task flow can be high. Conversely, if the one or more flow parameters for the respective candidate task flow cannot be resolved (e.g., due to a failure to obtain one or more values for the one or more flow parameters from the one or more data sources), then the flow parameter score determined for the respective candidate task flow can be low.

Determining task flow scores and/or task parameter scores for the plurality of candidate task flows can be advantageous for evaluating the reliability of each candidate task flow prior to selecting and executing any candidate task flow. In particular, the task flow scores and/or task parameter scores can be used to identify candidate task flows that cannot be resolved. This allows process 1100 to only select (e.g., at block 1122) and execute (e.g., at block 1124) candidate task flows that can be resolved, which improves the reliability and robustness of task flow processing by the digital assistant.

In some examples, each task flow score of the plurality of task flow scores is based on the intent confidence score of a respective candidate user intent corresponding to the respective candidate task flow. Further, in some examples, each task flow score of the plurality of task flow scores is based on the speech recognition confidence score of the respective candidate text representation corresponding to the respective candidate task flow. In some examples, each task flow score is based on a combination of the flow parameter score for the respective candidate task flow, the intent confidence score of the respective candidate user intent, and the speech recognition confidence score of the respective candidate text representation.

At block 1120, the plurality of candidate task flows are ranked (e.g., using task flow manager 838) according to the plurality of task flow scores of block 1116. For example, the plurality of candidate task flows are ranked from the highest task flow score to the lowest task flow score.

At block 1122, a first candidate task flow of the plurality of candidate task flows is selected (e.g., using task flow manager 838). In particular, the first candidate task flow of the plurality of candidate task flows is selected based on the plurality of task flow scores and the ranking of block 1120. For example, the selected first candidate task flow is the highest ranked candidate task flow of the plurality of candidate task flows (e.g., having the highest task flow score).

In some examples, the selected first candidate task flow has the highest task flow score, but corresponds to a candidate user intent having an intent confidence score that is not the highest intent confidence score among the plurality of candidate user intents. In some examples, the selected first candidate task flow corresponds to a text representation having a speech recognition score that is not the highest speech recognition score among the plurality of candidate text representations.

In the examples described above, process 1100 evaluates each of the plurality of candidate task flows in parallel to select the first candidate task flow having the highest task flow score. It should be appreciated, however, that in other examples, process 1100 can instead evaluate the plurality of candidate task flows serially. For instance, in some examples, a first task flow score is initially determined only for a candidate task flow corresponding to a candidate user intent having the highest intent confidence score. If the first task flow score satisfies a predetermined criterion (e.g., greater than a predetermined threshold level), then the corresponding candidate task flow is selected at block 1122. If, however, the first task flow score does not satisfy the predetermined criterion (e.g., less than the predetermined threshold level), then a second task flow score is determined for another candidate task flow corresponding to a candidate user intent having the next highest intent confidence score. Depending on whether or not the second task flow score satisfies the predetermined criterion, the another candidate task flow corresponding to the second task flow score can be selected at block 1122, or additional task flow scores can be subsequently determined for additional candidate task flows based on the associated intent confidence scores.

Selecting the first candidate task flow based on the plurality of task flow scores can enhance the accuracy and reliability of the digital assistant on the electronic device. In particular, using the plurality of task flow scores, process 1100 can avoid selecting candidate task flows that cannot be resolved. This can reduce the likelihood of task flow processing errors during execution of the selected first candidate task flow. Moreover, because candidate task flows that cannot be resolved are less likely to coincide with the user's actual goals, selecting the first candidate task flow based on the plurality of task flow scores can increase the likelihood that the selected first candidate task flow coincides with the user's actual desired goal. As a result, the accuracy and reliability of the digital assistant on the electronic device can be improved by selecting the first candidate task flow based on the plurality of task flow scores.

At block 1124, the first candidate task flow selected at block 1122 is executed (e.g., using task flow manager 838). Specifically, one or more actions represented by the first candidate task flow are performed. In some examples, results are obtained by executing the first candidate task flow. The results can include, for example, information requested by the user in the user utterance. In some examples, not all actions represented by the first candidate task flow are performed at block 1124. Specifically, actions that provide an output to the user of the device are not performed at block 1124. For example, block 1124 does not include displaying, on a display of the electronic device, the results obtained by executing the first candidate task flow. Nor does block 1124 include providing audio output (e.g., speech dialogue or music) on the electronic device. Thus, in some examples, the first candidate task flow is executed without providing any output to the user prior to detecting a speech end-point condition at block 1128.

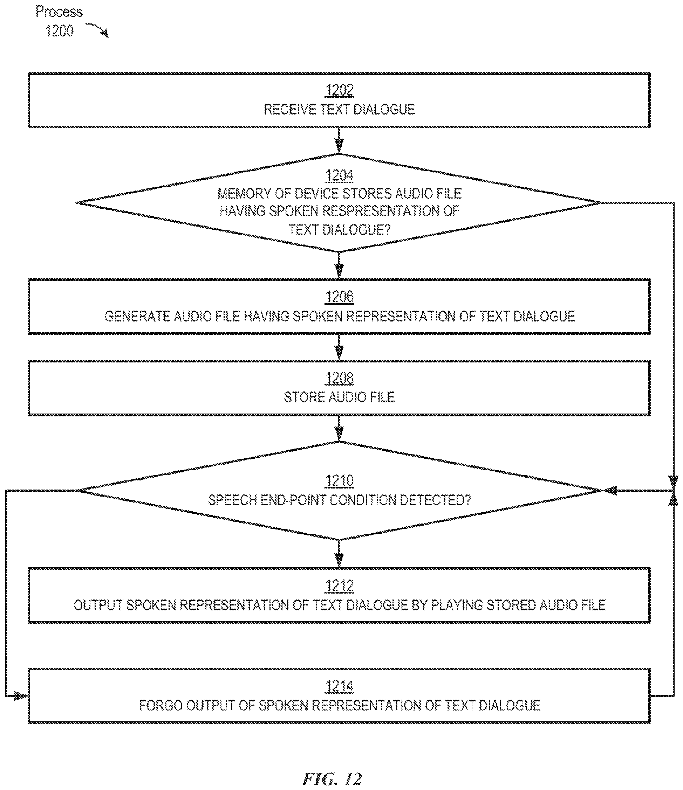

In some examples, executing the first candidate task flow at block 1124 can include performing the operations of block 1126. At block 1126, a text dialogue that is responsive to the user utterance is generated (e.g., using task flow manager 838 in conjunction with dialogue flow processing module 734). In some examples, the generated text dialogue includes results obtained from executing the first candidate task flow. In some examples, the text dialogue is generated at block 1126 without outputting the text dialogue or a spoken representation of the text dialogue to the user. In some examples, block 1126 further includes additional operations for generating a spoken representation of the text dialogue for output (e.g., operations of blocks 1202-1208 in process 1200, described below with reference to FIG. 12). In these examples, block 1126 can include generating a plurality of speech attribute values for the text dialogue. The plurality of speech attribute values provide information that can be used to generate the spoken representation of the text dialogue. In some examples, the plurality of speech attribute values can include a first speech attribute value that specifies the text dialogue (e.g., a representation of the text dialogue that can be used by a speech synthesis processing module to convert the text dialogue into corresponding speech). In some examples, the plurality of speech attribute values can specify one or more speech characteristics for generating the spoken representation of the text dialogue, such as language, gender, audio quality, type (e.g., accent/localization), speech rate, volume, pitch, or the like.

At block 1128, a determination is made as to whether a speech end-point condition is detected between the second time (e.g., second time 908 or 1008) and the third time (e.g., third time 910 or 1012). A speech end-point refers to a point in the stream of audio where the user has finished speaking (e.g., end of the user utterance). The determination of block 1128 is made, for example, while the stream of audio is being received from the second time to the third time at block 1102. In some examples, the determination of block 1128 is performed by monitoring one or more audio characteristics in the second portion of the stream of audio. For instance, in some examples, detecting the speech end-point condition can include detecting, in the second portion of the stream of audio, an absence of user speech for greater than a second predetermined duration (e.g., 600ms, 700ms, or 800ms). In these examples, block 1128 includes determining whether the second portion of the stream of audio contains a continuation of the user utterance in the first portion of the stream of audio. If a continuation of the user utterance in the first portion of the stream of audio is detected in the second portion of the stream of audio, then process 1100 can determine that a speech end-point condition is not detected between the second time and the third time. If a continuation of the user utterance in the first portion of the stream of audio is not detected in the second portion of the stream of audio for greater than the second predetermined duration, process 1100 can determine that a speech end-point condition is detected between the second time and the third time. The absence of user speech can be detected using similar speech detection techniques described above with respect to block 1110. In some examples, the second predetermined duration is longer than the first predetermined duration of block 1110.

In some examples, detecting the speech end-point condition includes detecting a predetermined type of non-speech input from the user between the second time and the third time. For example, a user may invoke the digital assistant at the first time by pressing and holding a button (e.g., "home" or menu button 304) of the electronic device. In this example, the predetermined type of non-speech input can be the user releasing the button (e.g., at the third time). In other examples, the predetermined type of non-speech input is a user input of an affordance displayed on the touch screen (e.g., touch screen 212) of the electronic device.

In response to determining that a speech end-point condition is detected between the second time and the third time, block 1130 is performed. Specifically, at block 1130, results from executing the selected first candidate task flow at block 1124 are presented to the user. In some examples, block 1130 includes outputting the results on the electronic device to the user. For example, the results are displayed on a display of the electronic device. The results can include, for example, the text dialogue generated at block 1126. In some examples, the results are presented to the user in the form of audio output. For example, the results can include music or speech dialogue.

In some examples, presenting the results at block 1130 includes performing the operations of block 1132. Specifically, at block 1132, a spoken representation of the text dialogue generated at block 1126 is outputted. Outputting the spoken representation of the text dialogue includes, for example, playing an audio file having the spoken representation of the text dialogue. In some examples, outputting the spoken representation of the text dialogue includes performing one or more of the blocks of process 1200, described below with reference to FIG. 12. For example, outputting the spoken representation of the text dialogue includes determining whether the memory of the electronic device stores an audio file having the spoken representation of the text dialogue (block 1204). In response to determining that the memory of the electronic device stores an audio file having the spoken representation of the text dialogue, the spoken representation of the text dialogue is outputted by playing the stored audio file (block 1212). In response to determining that the memory of the electronic device does not store an audio file having the spoken representation of the text dialogue, an audio file having the spoken representation of the text dialogue is generated (block 1206) and stored (block 1208) in the memory of the electronic device. In response to determining that the speech end-point condition is detected (block 1128 or 1210), the stored audio file is played to output the spoken representation of the text dialogue (block 1212).

As discussed above, at least partially performing the operations of blocks 1112-1126 and/or 1202-1208 between the second time and the third time (prior to detecting the speech end-point condition at block 1128 or 1210) can reduce the number of operations required to be performed upon detecting the speech end-point condition. Thus, less computation can be required upon detecting the speech end-point condition, which can enable the digital assistant to provide a quicker response (e.g., by presenting the results at block 1130 or outputting spoken dialogue at block 1132 or 1212) upon detecting the speech end-point condition.

With reference back to block 1128, in response to determining that a speech end-point condition is not detected between the second time and the third time, process 1100 forgoes performance of block 1130 (and block 1132). For example, if process 1100 determines that the second portion of the stream of audio contains a continuation of the user utterance, then no speech end-point condition is detected between the second time and the third time and process 1100 forgoes performance of blocks 1130 and 1132. Specifically, process 1100 forgoes presenting results from executing the selected first candidate task flow of block 1122. In examples where text dialogue is generated, process 1100 further forgoes output of a spoken representation of the text dialogue. Furthermore, if process 1100 is still performing any of the operations of blocks 1112-1126 or blocks 1202-1208 with respect to the utterance in the first portion of the stream of audio, process 1100 ceases to perform these operations upon determining that a speech end-point condition is not detected between the second time and the third time.

In some examples, in response to determining that a speech end-point condition is not detected between the second time and the third time, process 1100 can return to one or more of blocks 1102-1126 to process the speech in the second portion of the stream of audio. Specifically, upon detecting a continuation of the user utterance in the second portion of the stream of audio, speech recognition is performed (block 1108) on the continuation of the user utterance in the second portion of the stream of audio. Additionally, in some examples, process 1100 continues to receive the stream of audio (block 1102) after the third time. Specifically, a third portion of the stream of audio can be received (block 1102) from the third time (third time 1012) to a fourth time (fourth time 1014).

In some examples, the speech recognition results of the continuation of the user utterance in the second portion of the stream of audio is combined with the speech recognition results of the user utterance in the first portion of the stream of audio to obtain a second plurality of candidate text representations. Each candidate text representation of the second plurality of candidate text representations is a text representation of the user utterance across the first and second portions of the stream of audio.

A determination is made (block 1110) as to whether the second portion of the stream of audio satisfies a predetermined condition. In response to determining that the second portion of the stream of audio satisfies a predetermined condition, one or more of the operations of blocks 1112-1126 are performed with respect to the second plurality of candidate text representations. In particular, in response to determining that the second portion of the stream of audio satisfies a predetermined condition, one or more of the operations of blocks 1112-1130 are at least partially performed between the third time (e.g., third time 1012) and the fourth time (e.g., fourth time 1014) (e.g., while receiving the third portion of the stream of audio at block 1102).

Based on the second plurality of candidate text representations, a second plurality of candidate user intents for the user utterance in the first and second portions of the stream of audio are determined (block 1112). A second plurality of candidate task flows are determined (block 1114) from the second plurality of candidate user intents. Specifically, each candidate user intent of the second plurality of candidate user intents is mapped to a corresponding candidate task flow of the second plurality of candidate task flows. A second candidate task flow is selected from the second plurality of candidate task flows (block 1122). The selection can be based on a second plurality of task flow scores determined for the second plurality of candidate task flows (block 1116). The selected second candidate task flow is executed (block 1124) without providing any output to the user prior to detecting a speech end-point condition. In some examples, second results are obtained from executing the second candidate task flow. In some examples, executing the second candidate task flow includes generating a second text dialogue (block 1126) that is responsive to the user utterance in the first and second portions of the stream of audio. In some examples, the second text dialogue is generated without outputting the second text dialogue or a spoken representation of the second text dialogue to the user prior to detecting a speech end-point condition. In some examples, additional operations for generating a spoken representation of the second text dialogue for output are performed (e.g., operations in blocks 1202-1208 of process 1200, described below with reference to FIG. 12).

In some examples, a determination is made (block 1128) as to whether a speech end-point condition is detected between the third time and the fourth time. In response to determining that a speech end-point condition is detected between the third time and the fourth time, second results from executing the selected second candidate task flow are presented to the user (block 1130). In some examples, presenting the second results includes outputting, to the user of the device, the spoken representation of the second text dialogue by playing a stored second audio file (e.g., a stored second audio file generated at block 1206).

FIG. 12 illustrates process 1200 for operating a digital assistant to generate a spoken dialogue response, according to various examples. In some examples, process 1200 is implemented as part of process 1100 for operating a digital assistant. Process 1100 is performed, for example, using one or more electronic devices implementing a digital assistant. Implementing process 1200 in a digital assistant system can reduce the latency associated with text-to-speech processing. In some examples, process 1200 is performed using a client-server system (e.g., system 100), and the blocks of process 1200 are divided up in any manner between the server (e.g., DA server 106) and a client device (user device 104). In some examples, process 1200 is performed using only a client device (e.g., user device 104) or only multiple client devices. In process 1100, some blocks are, optionally, combined, the order of some blocks is, optionally, changed, and some blocks are, optionally, omitted. In some examples, additional operations may be performed in combination with process 1200.

At block 1202, a text dialogue is received (e.g., at speech synthesis processing module 740). In some examples, the text dialogue is generated by the digital assistant system (e.g., at block 1126) in response to a received user utterance (e.g., at block 1102). In some examples, the text dialogue is received with a plurality of associated speech attribute values (e.g., speech attribute values, described above with reference to block 1126). In some examples, the plurality of speech attribute values specify one or more speech characteristics for generating the spoken representation of the text dialogue. The one or more speech characteristics include, for example, language, gender, audio quality, type (e.g., accent/localization), speech rate, volume, pitch, or the like. The combination of the text dialogue and the plurality of speech attribute values can represent a request to generate a spoken representation of the text dialogue in accordance with the one or more speech characteristics defined in the plurality of speech attribute values.

In response to receiving the text dialogue at block 1202, block 1204 is performed. At block 1204, a determination is made (e.g., using speech synthesis processing module 740) as to whether the memory (e.g., memory 202, 470, or 702) of the electronic device (e.g., device 104, 200, 600, or 700) stores an audio file having the spoken representation of the text dialogue. For example, block 1204 includes searching the memory of the electronic device for an audio file having the spoken representation of the text dialogue. In some examples, the memory of the electronic device contains one or more audio files. In these examples, block 1204 includes analyzing each audio file of the one or more audio files to determine whether one of the one or more audio files includes a plurality of speech attribute values that match the plurality of speech attribute values for the text dialogue received at block 1202. If an audio file of the one or more audio files has a first plurality of speech attribute values that match the plurality of speech attribute values for the text dialogue, then it would be determined that the memory stores an audio file having the spoken representation of the text dialogue.

In some examples, block 1204 includes searching the file names of the one or more audio files stored in the memory of the electronic device. In these examples, the file name of each audio file is analyzed to determine whether the file name represents a plurality of speech attribute values that match the plurality of speech attribute values for the text dialogue. Specifically, each file name can encode (e.g., using md5 hash) a plurality of speech attribute values. Thus, analyzing the file names of the one or more audio files stored in the memory can determine whether the memory stores an audio file having the spoken representation of the text dialogue.

In response to determining that the memory of the electronic device stores an audio file having the spoken representation of the text dialogue, process 1200 forgoes performance of blocks 1206 and 1208 and proceeds to block 1210. In response to determining that the memory of the electronic device does not store an audio file having the spoken representation of the text dialogue, block 1206 is performed.

At block 1206, an audio file having the spoken representation of the text dialogue is generated (e.g., using speech synthesis processing module 740). In particular, speech synthesis is performed using the text dialogue and the associated plurality of speech attribute values to generate the audio file of the spoken representation of the text dialogue. The spoken representation of the text dialogue is generated according to the one or more speech characteristics specified in the plurality of speech attribute values.

At block 1208, the audio file generated at block 1206 is stored in the memory of the electronic device. In some examples, the audio file having the spoken representation of the text dialogue can indicate the plurality of speech attribute values for the text dialogue. Specifically, in some examples, the audio file having the spoken representation of the text dialogue is stored with a file name that encodes the plurality of speech attribute values for the text dialogue (e.g., using md5 hash).

In some examples, blocks 1202-1208 are performed without providing any output (e.g., audio or visual) to the user. Specifically, neither the text dialogue nor the spoken representation of the text dialogue is outputted to the user prior to determining that the speech end-point condition is detected at block 1210. Blocks 1202-1208 of process 1200 are performed at least partially prior to a speech end-point condition being detected at block 1210. This can be advantageous for reducing the response latency of the digital assistant on the electronic device.

At block 1210, a determination is made (e.g., using latency management module 780) as to whether a speech end-point condition is detected. Block 1208 is similar or substantially identical to block 1128, described above. For example, the determination can be made between the second time (e.g., second time 908) and the third time (e.g., third time 910) while the second portion of the stream of audio is received at block 1102. In response to determining that a speech end-point condition is detected, block 1212 is performed. Specifically, at block 1212, the spoken representation of the text dialogue is outputted to the user by playing the stored audio file. Block 1212 is similar or substantially identical to block 1132. In response to determining that a speech end-point condition is not detected, process 1200 forgoes output of the spoken representation of the text dialogue (block 1214). For example, process 1100 can remain at block 1210 to await detection of the speech end-point condition.

In the examples described above, a suitable candidate task flow is first selected (block 1122) and the selected candidate task flow is then executed (block 1124). Moreover, an audio file of spoken dialogue is generated (block 1206) only for the selected candidate task flow. However, it should be recognized that, in other examples, a suitable candidate task flow can be selected at block 1122 while executing a plurality of candidate task flows at block 1124. In certain implementations, executing the plurality of candidate task flows prior to selecting a suitable candidate task flow can be advantageous for reducing latency. Specifically, determining the task flow scores (block 1116) and selecting a suitable candidate task flow (block 1122) based on the determined task flow scores can be computationally intensive and thus to reduce latency, the plurality of candidate task flows can be executed in parallel while determining the task flow scores and selecting a suitable candidate task flow. In addition, a plurality of respective audio files containing spoken dialogues for the plurality of candidate task flows can be generated at block 1206 while determining the task flow scores and selecting a suitable candidate task flow. By performing these operations in parallel, when a suitable candidate task flow is selected, the selected candidate task flow would have been, for example, at least partially executed and the respective audio file containing spoken dialogue for the selected candidate task flow would have been, for example, at least partially generated. As a result, response latency can be further reduced. Upon detecting a speech end-point condition at block 1128 or 1210, the result corresponding to the selected candidate task flow can be retrieved from the plurality of results and presented to the user. In addition, the audio file corresponding to the selected candidate task flow can be retrieved from the plurality of audio files and played to output the corresponding spoken dialogue for the selected candidate task flow.

The operations described above with reference to FIGS. 11A-11B and 12 are optionally implemented by components depicted in FIGS. 1-4, 6A-B, 7A-7C, and 8. For example, the operations of processes 1100 and 1200 may be implemented by I/O processing module 728, STT processing module 730, natural language processing module 732, dialogue flow processing module 734, task flow processing module 736, speech synthesis processing module 740, audio processing module 770, latency management module 780, task flow manager 838, and task flow resolver 840. It would be clear to a person having ordinary skill in the art how other processes are implemented based on the components depicted in FIGS. 1-4, 6A-B, 7A-7C, and 8.

In accordance with some implementations, a computer-readable storage medium (e.g., a non-transitory computer-readable storage medium) is provided, the computer-readable storage medium storing one or more programs for execution by one or more processors of an electronic device, the one or more programs including instructions for performing any of the methods or processes described herein.

In accordance with some implementations, an electronic device (e.g., a portable electronic device) is provided that comprises means for performing any of the methods or processes described herein.

In accordance with some implementations, an electronic device (e.g., a portable electronic device) is provided that comprises a processing unit configured to perform any of the methods or processes described herein.

In accordance with some implementations, an electronic device (e.g., a portable electronic device) is provided that comprises one or more processors and memory storing one or more programs for execution by the one or more processors, the one or more programs including instructions for performing any of the methods or processes described herein.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art.

## Claims

1. A method for operating a digital assistant, the method comprising:
at an electronic device having one or more processors and memory:
receiving a user utterance;
determining, based on a plurality of candidate text representations of the user utterance, a plurality of candidate user intents for the user utterance, wherein each candidate user intent of the plurality of candidate user intents corresponds to a respective candidate task flow of a plurality of candidate task flows;
determining a plurality of task flow scores for the plurality of candidate task flows, each task flow score of the plurality of task flow scores corresponding to a respective candidate task flow of the plurality of candidate task flows;
selecting, based on the plurality of task flow scores, a first candidate task flow of the plurality of candidate task flows; and
executing the first candidate task flow, including presenting, to the user, results from executing the first candidate task flow.

2. The method of claim 1, further comprising:
for each candidate task flow of the plurality of candidate task flows:
resolving one or more flow parameters of the respective candidate task flow,
wherein a respective task flow score for the respective candidate task flow is based on resolving the one or more flow parameters of the respective candidate task flow.

3. The method of claim 2, wherein resolving the one or more flow parameters of the respective candidate task flow comprises searching a data source for one or more values corresponding to the one or more flow parameters, the data source corresponding to one or more properties of a respective candidate user intent of the plurality of candidate user intents.

4. The method of claim 1, wherein:
the first candidate task flow corresponds to a first candidate user intent of the plurality of candidate user intents;
a first task flow score of the plurality of task flow scores is for the first candidate task flow;
determining the plurality of task flow scores includes determining a flow parameter value corresponding to a property of the first candidate user intent, the flow parameter value not specified in the user utterance; and
the first task flow score is based on whether the flow parameter value can be determined by the electronic device.

5. The method of claim 4, wherein the first task flow score is further based on a first intent confidence score of the first candidate user intent.

6. The method of claim 5, wherein the first task flow score is a highest task flow score of the plurality of task flow scores, and wherein the first intent confidence score is not a highest intent confidence score of a plurality of intent confidence scores that correspond to the plurality of candidate user intents.

7. The method of claim 4, wherein:
the first candidate user intent is determined from a first candidate text representation of the plurality of candidate text representations; and
the first task flow score is further based on a first speech recognition confidence score of the first candidate text representation.

8. The method of claim 7, wherein the first task flow score is a highest task flow score of the plurality of task flow scores, and wherein the first speech recognition confidence score is not a highest speech recognition confidence score of a plurality of speech recognition confidence scores that correspond to the plurality of candidate text representations.

9. The method of claim 1, wherein:
each candidate text representation of the plurality of candidate text representations has an associated speech recognition confidence score; and
each task flow score of the plurality of task flow scores is based on a respective speech recognition confidence score of a respective candidate text representation of the plurality of candidate text representations.

10. The method of claim 1, wherein:
each candidate user intent of the plurality of candidate user intents has an associated intent confidence score; and
each task flow score of the plurality of task flow scores is based on a respective intent confidence score of a respective candidate user intent of the plurality of candidate user intents.

11. The method of claim 1, wherein:
a first candidate user intent of the plurality of candidate user intents is determined from a first candidate text representation of the plurality of candidate text representations; and
a second candidate user intent of the plurality of candidate user intents is determined from a second candidate text representation of the plurality of candidate text representations.

12. The method of claim 1, further comprising:
ranking the plurality of candidate task flows in accordance with the plurality of task flow scores, wherein selecting the first candidate task flow is based on the ranking of the plurality of candidate task flows.

13. An electronic device, comprising:
one or more processors;
a memory; and
one or more programs, wherein the one or more programs are stored in the memory and configured to be executed by the one or more processors, the one or more programs including instructions for performing the methods of any one of claims 1-12.

14. A computer-readable storage medium storing one or more programs, the one or more programs comprising instructions, which when executed by one or more processors of an electronic device, cause the electronic device to perform the methods of any one of claims 1-12.

## Patentansprüche

1. Verfahren zum Betreiben eines digitalen Assistenten, wobei das Verfahren Folgendes umfasst:
an einer elektronischen Vorrichtung, die einen oder mehrere Prozessoren und einen Speicher aufweist:
Empfangen einer Benutzeräußerung;
Bestimmen einer Vielzahl von Kandidatenbenutzerabsichten für die Benutzeräußerung auf Grundlage einer Vielzahl von Kandidatentextdarstellungen der Benutzeräußerung, wobei jede Kandidatenbenutzerabsicht der Vielzahl von Kandidatenbenutzerabsichten einem jeweiligen Kandidatenaufgabenablauf einer Vielzahl von Kandidatenaufgabenabläufen entspricht;
Bestimmen einer Vielzahl von Aufgabenablaufbewertungen für die Vielzahl von Kandidatenaufgabenabläufen, wobei jede Aufgabenablaufbewertung der Vielzahl von Aufgabenablaufbewertungen einem jeweiligen Kandidatenaufgabenablauf der Vielzahl von Kandidatenaufgabenabläufen entspricht;
Auswählen eines ersten Kandidatenaufgabenablaufs der Vielzahl von Kandidatenaufgabenabläufen auf Grundlage der Vielzahl von Aufgabenablaufbewertungen; und
Ausführen des ersten Kandidatenaufgabenablaufs, einschließlich Darstellen von Ergebnissen aus dem Ausführen des ersten Kandidatenaufgabenablaufs für den Benutzer.

2. Verfahren nach Anspruch 1, ferner umfassend:
für jeden Kandidatenaufgabenablauf der Vielzahl von Kandidatenaufgabenabläufen:
Lösen eines oder mehrerer Ablaufparameter des jeweiligen Kandidatenaufgabenablaufs, wobei eine jeweilige Aufgabenablaufbewertung für den jeweiligen Kandidatenaufgabenablauf auf dem Lösen des einen oder der mehreren Ablaufparameter des jeweiligen Kandidatenaufgabenablaufs basiert.

3. Verfahren nach Anspruch 2, wobei das Lösen des einen oder der mehreren Ablaufparameter des jeweiligen Kandidatenaufgabenablaufs Suchen einer Datenquelle für einen oder mehrere Werte umfasst, die dem einen oder den mehreren Ablaufparametern entsprechen, wobei die Datenquelle einer oder mehreren Eigenschaften einer jeweiligen Kandidatenbenutzerabsicht der Vielzahl von Kandidatenbenutzerabsichten entspricht.

4. Verfahren nach Anspruch 1, wobei:
der erste Kandidatenaufgabenablauf einer ersten Kandidatenbenutzerabsicht der Vielzahl von Kandidatenbenutzerabsichten entspricht;
eine erste Aufgabenablaufbewertung der Vielzahl von Aufgabenablaufbewertungen für den ersten Kandidatenaufgabenablauf gilt;
das Bestimmen der Vielzahl von Aufgabenablaufbewertungen Bestimmen eines Ablaufparameterwerts beinhaltet, der einer Eigenschaft der ersten Kandidatenbenutzerabsicht entspricht, wobei die Aufgabenablaufbewertung in der Benutzeräußerung nicht vorgegeben ist; und
die erste Aufgabenablaufbewertung darauf basiert, ob der Ablaufparameterwert durch die elektronische Vorrichtung bestimmt werden kann.

5. Verfahren nach Anspruch 4, wobei die erste Aufgabenablaufbewertung ferner auf einer ersten Absichskonfidenzbewertung der ersten Kandidatenbenutzerabsicht basiert.

6. Verfahren nach Anspruch 5, wobei die erste Aufgabenablaufbewertung eine höchste Aufgabenablaufbewertung der Vielzahl von Aufgabenablaufbewertungen ist und wobei die erste Absichskonfidenzbewertung nicht die höchste Absichskonfidenzbewertung einer Vielzahl von Absichskonfidenzbewertungen ist, die der Vielzahl von Kandidatenbenutzerabsichten entspricht.

7. Verfahren nach Anspruch 4, wobei:
die erste Kandidatenbenutzerabsicht aus einer ersten Kandidatentextdarstellung der Vielzahl von Kandidatentextdarstellung bestimmt wird; und
die erste Aufgabenablaufbewertung ferner auf einer ersten Spracherkennungskonfidenzbewertung der ersten Kandidatentextdarstellung basiert.

8. Verfahren nach Anspruch 7, wobei die erste Aufgabenablaufbewertung eine höchste Aufgabenablaufbewertung der Vielzahl von Aufgabenablaufbewertungen ist und wobei die ersten Spracherkennungskonfidenzbewertung keine höchste Spracherkennungskonfidenzbewertung einer Vielzahl von Spracherkennungskonfidenzbewertungen ist, die der Vielzahl von Kandidatentextdarstellungen entspricht.

9. Verfahren nach Anspruch 1, wobei:
jede Kandidatentextdarstellung der Vielzahl von Kandidatentextdarstellungen eine zugeordnete Spracherkennungskonfidenzbewertung aufweist; und
jede Aufgabenablaufbewertung der Vielzahl von Aufgabenablaufbewertungen auf einer jeweiligen Spracherkennungskonfidenzbewertung einer jeweiligen Kandidatentextdarstellung der Vielzahl von Kandidatentextdarstellungen basiert.

10. Verfahren nach Anspruch 1, wobei:
jede Kandidatenbenutzerabsicht der Vielzahl von Kandidatenbenutzerabsichten eine zugeordnete Absichskonfidenzbewertung aufweist; und
jede Aufgabenablaufbewertung der Vielzahl von Aufgabenablaufbewertungen auf einer jeweiligen Absichskonfidenzbewertung einer jeweiligen Kandidatenbenutzerabsicht der Vielzahl von Kandidatenbenutzerabsichten basiert.

11. Verfahren nach Anspruch 1, wobei:
eine erste Kandidatenbenutzerabsicht der Vielzahl von Kandidatenbenutzerabsichten aus einer ersten Kandidatentextdarstellung der Vielzahl von Kandidatentextdarstellung bestimmt wird; und
eine zweite Kandidatenbenutzerabsicht der Vielzahl von Kandidatenbenutzerabsichten aus einer zweiten Kandidatentextdarstellung der Vielzahl von Kandidatentextdarstellung bestimmt wird.

12. Verfahren nach Anspruch 1, ferner umfassend:
Ranking der Vielzahl von Kandidatenaufgabenabläufen gemäß der Vielzahl von Aufgabenablaufbewertungen, wobei das Auswählen des ersten Kandidatenaufgabenablaufs auf dem Ranking der Vielzahl von Kandidatenaufgabenabläufen basiert.

13. Elektronische Vorrichtung, umfassend:
einen oder mehrere Prozessoren;
einen Speicher; und
ein oder mehrere Programme, wobei das eine oder die mehreren Programme auf dem Speicher gespeichert sind und dazu konfiguriert sind, durch den einen oder die mehreren Prozessoren ausgeführt zu werden, wobei das eine oder die mehreren Programme Anweisungen zum Durchführen der Verfahren nach einem der Ansprüche 1-12 beinhalten.

14. Computerlesbares Speichermedium, auf dem ein oder mehrere Programme gespeichert sind, wobei das eine oder die mehreren Programme Anweisungen umfassen, die bei Ausführung durch einen oder mehrere Prozessoren einer elektronischen Vorrichtung die elektronische Vorrichtung dazu veranlassen, die Verfahren nach einem der Ansprüche 1-12 durchzuführen.

## Revendications

1. Procédé pour faire fonctionner un assistant numérique, le procédé comprenant :
au niveau d'un appareil électronique ayant un ou plusieurs processeurs et une mémoire :
la réception d'un énoncé d'utilisateur ;
la détermination, sur la base d'une pluralité de représentations textuelles candidates de l'énoncé d'utilisateur, d'une pluralité d'intentions d'utilisateur candidates pour l'énoncé d'utilisateur, dans lequel chaque intention d'utilisateur candidate de la pluralité d'intentions d'utilisateur candidates correspond à un flux de tâches candidats respectif d'une pluralité de flux de tâches candidats ;
la détermination d'une pluralité de scores de flux de tâches pour la pluralité de flux de tâches candidats, chaque score de flux de tâches de la pluralité de scores de flux de tâches correspondant à un flux de tâches candidat respectif de la pluralité de flux de tâches candidats ;
la sélection, sur la base de la pluralité de scores de flux de tâches, d'un premier flux de tâches candidat parmi la pluralité de flux de tâches candidats ; et
l'exécution du premier flux de tâches candidat, y compris la présentation, à l'utilisateur, de résultats de l'exécution du premier flux de tâches candidat.

2. Procédé selon la revendication 1, comprenant en outre :
pour chaque flux de tâches candidat de la pluralité de flux de tâches candidats :
la résolution d'un ou de plusieurs paramètres de flux du flux de tâches candidat respectif, dans lequel un score de flux de tâches respectif pour le flux de tâches candidat respectif est basé sur la résolution des un ou plusieurs paramètres de flux du flux de tâches candidat respectif.

3. Procédé selon la revendication 2, dans lequel la résolution des un ou plusieurs paramètres de flux du flux de tâches candidat respectif comprend la recherche d'une source de données pour une ou plusieurs valeurs correspondant aux un ou plusieurs paramètres de flux, la source de données correspondant à une ou plusieurs propriétés d'une intention d'utilisateur candidate respective de la pluralité d'intentions d'utilisateur candidates.

4. Procédé selon la revendication 1, dans lequel :
le premier flux de tâches candidat correspond à une première intention d'utilisateur candidate parmi la pluralité d'intentions d'utilisateur candidates ;
un premier score de flux de tâches parmi la pluralité de scores de flux de tâches est pour le premier flux de tâches candidat ;
la détermination de la pluralité de scores de flux de tâches comporte la détermination d'une valeur de paramètre de flux correspondant à une propriété de la première intention d'utilisateur candidate, la valeur de paramètre de flux n'étant pas spécifiée dans l'énoncé d'utilisateur ; et
le premier score de flux de tâches est basé sur le fait que la valeur de paramètre de flux peut être déterminée par le dispositif électronique.

5. Procédé selon la revendication 4, dans lequel le premier score de flux de tâches est en outre basé sur un premier score de confiance d'intention de la première intention d'utilisateur candidate.

6. Procédé selon la revendication 5, dans lequel le premier score de flux de tâches est un score de flux de tâches le plus élevé de la pluralité de scores de flux de tâches, et dans lequel le premier score de confiance d'intention n'est pas un score de confiance d'intention le plus élevé d'une pluralité de scores de confiance d'intention qui correspondent à la pluralité d'intentions d'utilisateur candidates.

7. Procédé selon la revendication 4, dans lequel :
la première intention d'utilisateur candidate est déterminée à partir d'une première représentation textuelle candidate de la pluralité de représentations textuelles candidates ; et
le premier score de flux de tâches est en outre basé sur un premier score de confiance de reconnaissance vocale de la première représentation textuelle candidate.

8. Procédé selon la revendication 7, dans lequel le premier score de flux de tâches est un score de flux de tâches le plus élevé de la pluralité de scores de flux de tâches, et dans lequel le premier score de confiance de reconnaissance vocale n'est pas un score de confiance de reconnaissance vocale le plus élevé parmi une pluralité de scores de confiance de reconnaissance vocale qui correspondent à la pluralité de représentations textuelles candidates.

9. Procédé selon la revendication 1, dans lequel :
chaque représentation textuelle candidate de la pluralité de représentations textuelles candidates a un score de confiance de reconnaissance vocale associé ; et
chaque score de flux de tâches de la pluralité de scores de flux de tâches est basé sur un score de confiance de reconnaissance vocale respectif d'une représentation textuelle candidate respective de la pluralité de représentations textuelles candidates.

10. Procédé selon la revendication 1, dans lequel :
chaque intention d'utilisateur candidate de la pluralité d'intentions d'utilisateur candidates a un score de confiance d'intention associé ; et
chaque score de flux de tâches de la pluralité de scores de flux de tâches est basé sur un score de confiance d'intention respectif d'une intention d'utilisateur candidate respective de la pluralité d'intentions d'utilisateur candidates.

11. Procédé selon la revendication 1, dans lequel :
une première intention d'utilisateur candidate de la pluralité d'intentions d'utilisateur candidates est déterminée à partir d'une première représentation textuelle candidate de la pluralité de représentations textuelles candidates ; et
une seconde intention d'utilisateur candidate de la pluralité d'intentions d'utilisateur candidates est déterminée à partir d'une seconde représentation textuelle candidate de la pluralité de représentations textuelles candidates.

12. Procédé selon la revendication 1, comprenant en outre :
le classement de la pluralité de flux de tâches candidats en fonction de la pluralité de scores de flux de tâches, dans lequel la sélection du premier flux de tâches candidat est basée sur le classement de la pluralité de flux de tâches candidats.

13. Dispositif électronique, comprenant :
un ou plusieurs processeurs ;
une mémoire ; et
un ou plusieurs programmes, dans lequel les un ou plusieurs programmes sont stockés dans la mémoire et configurés pour être exécutés par les un ou plusieurs processeurs, les un ou plusieurs programmes comportant des instructions pour exécuter les procédés selon l'une quelconque des revendications 1 à 12.

14. Support de stockage lisible par ordinateur stockant un ou plusieurs programmes, les un ou plusieurs programmes comprenant des instructions qui, lorsqu'elles sont exécutées par un ou plusieurs processeurs d'un dispositif électronique, amènent le dispositif électronique à exécuter les procédés selon l'une quelconque des revendications 1 à 12.
